# EUROPEAN PATENT APPLICATION

(11) **EP 4 195 676 A1**
(43) Date of publication of application: **14.06.2023**
(21) Application number: 21860070.8
(22) Date of filing: 03.08.2021
(51) Int. Cl.: H04N 21/4788, H04N 7/14, A63F 13/212

(54) **VIDEO INTERACTION METHOD AND DEVICE**

(30) Priority: 28.08.2020 CN 202010885740
(71) Applicant: Huawei Technologies Co., Ltd., Shenzhen, Guangdong 518129 (CN)
(72) Inventor: WU, Dongang, Shenzhen, Guangdong 518129 (CN)
(74) Representative: Gill Jennings & Every LLP
(86) International application number: PCT/CN2021/110340
(87) International publication number: WO 2022/042230

(57) **Abstract**

This application provides a video interaction method and a device. The method includes: obtaining first action information collected by a first wearable device and second action information collected by a second wearable device, where the first wearable device is connected to a first terminal device, and the second wearable device is connected to a second terminal device; determining a target terminal identity based on the first action information and the second action information; sending the target terminal identity to the second terminal device, where the target terminal identity is used by the second terminal device to display an animation in a video window corresponding to the target terminal identity; and displaying the animation in a video window corresponding to the target terminal identity. This increases fun and interaction of a video call.

## Description

This application claims priority to Chinese Patent Application No. 202010885740.3, filed with the China National Intellectual Property Administration on August 28, 2020 and entitled "VIDEO INTERACTION METHOD AND DEVICE", which is incorporated herein by reference in its entirety.

### TECHNICAL FIELD

The present invention relates to the terminal field, and in particular, to a video interaction method and a device.

### BACKGROUND

With rapid development of a network environment, more large-screen devices such as a foldable screen, a tablet computer (portable android device, Pad for short), and a smart screen can be used for video calls. Users use video calls in more scenarios with higher frequency. User experience can be improved if users can interact with each other during a video call.

In the conventional technology, interaction is implemented in the following manner: In a video call process, when one party wants to interact with the other party, a specific action is performed. After collecting a video image, a terminal device identifies the action. If the action is a preset action, the collected video image and animation information corresponding to the preset action are sent to another terminal device, and the another terminal device displays the video image and an animation corresponding to the animation information in a peer video window.

However, the foregoing method has a single interaction function, and user experience is insufficient.

### SUMMARY

This application provides a video interaction method and a device, to enrich an interaction function in a process of a video call.

According to a first aspect, this application provides a video interaction method, applied to a first terminal device. The method includes: obtaining first action information collected by a first wearable device and second action information collected by a second wearable device, where the first wearable device is connected to the first terminal device, and the second wearable device is connected to a second terminal device; determining a target terminal identity based on the first action information and the second action information; sending the target terminal identity to the second terminal device, where the target terminal identity is used by the second terminal device to display an animation in a video window corresponding to the target terminal identity; and displaying the animation in a video window corresponding to the target terminal identity.

In the video interaction method, the terminal devices and the wearable devices may be associated. Users of both parties may perform sports interaction by using the wearable devices, and the terminal devices may display a corresponding animation in video windows corresponding to a winner, thereby increasing fun and interaction of a video call.

Optionally, the obtaining first action information collected by a first wearable device and second action information collected by a second wearable device includes: receiving an interaction function enabling instruction, where the interaction function enabling instruction includes a timer; sending a first collection instruction to the first wearable device; sending the interaction function enabling instruction to the second terminal device, where the interaction function enabling instruction is used by the second terminal device to send a second collection instruction to the second wearable device according to the interaction function enabling instruction; determining action information collected by the first wearable device when the timer stops as the first action information; receiving action information that is sent by the second terminal device and that is collected by the second wearable device when the timer stops; and determining the action information collected by the second wearable device as the second action information.

Optionally, the method further includes: displaying, in real time, the action information collected by the first wearable device.

Optionally, before the displaying, in real time, the action information collected by the first wearable device, the method further includes: displaying a local video window and a peer video window that are on the first terminal device in parallel, so that a better interaction experience effect can be achieved.

According to a second aspect, this application provides a video interaction method, applied to a first terminal device. The method includes: identifying a first video image to obtain a first action in the first video image, where the first video image is an image collected by the first terminal device in a process of a video call between the first terminal device and a second terminal device; determining first animation information based on the first action; and sending the first animation information to the second terminal device, where the first animation information is used by the second terminal device to display, in a local video window, an animation corresponding to the first animation information.

In the foregoing method, a peer user can see an animation effect in a local video window used to display a picture of the peer user, thereby improving a sense of participation of the peer user.

Optionally, the determining first animation information based on the first action includes: determining, based on the first action and a plurality of preset actions, animation information corresponding to the first action; and determining the animation information corresponding to the first action as the first animation information.

Optionally, before the identifying a first video image, the method further includes: receiving an interaction function enabling instruction; sending the interaction function enabling instruction to the second terminal device; receiving an enabling consent instruction from the second terminal device; and displaying a local video window and a peer video window on the first terminal device in parallel.

Optionally, the determining first animation information based on the first action includes: receiving a second action from the second terminal device, where the second action is obtained by the second terminal device by identifying a second video image, and the second video image is an image collected by the second terminal device in the process of the video call between the second terminal device and the first terminal device; and if the first action and the second action are a combined action, determining animation information corresponding to the combined action as the first animation information.

According to the video interaction method, the combined action that is jointly completed by two users in the process of the video call can be identified, and both users can see the animation effect generated by the combined action, thereby improving a sense of participation of the two users.

Optionally, before the identifying a first video image, the method further includes: receiving an interaction function enabling instruction; sending the interaction function enabling instruction to the second terminal device; receiving an enabling consent instruction from the second terminal device; and displaying a local video window and a peer video window on the first terminal device in parallel.

Optionally, the method further includes: determining an animation display area in the local video window on the first terminal device; and displaying, in the animation display area, the animation corresponding to the first animation information.

According to a third aspect, this application provides a video interaction method, applied to a second terminal device. The method includes: receiving a terminal device identity from a first terminal device, where the target terminal identity is determined by the first terminal device based on first action information and second action information, the first action information is collected by a first wearable device, the second action information is collected by a second wearable device, the first wearable device is connected to the first terminal device, and the second wearable device is connected to the second terminal device; and displaying an animation in a video window corresponding to the target terminal.

Optionally, before the receiving a target terminal identity from a first terminal device, the method further includes: receiving an interaction function enabling instruction from the first terminal device, where the interaction function enabling instruction includes a timer; sending a second collection instruction to the second wearable device according to the interaction function enabling instruction; and sending, to the first terminal device, action information collected by the second wearable device when the timer stops.

Optionally, the method further includes: displaying, in real time, the action information collected by the second wearable device.

Optionally, before the displaying, in real time, the action information collected by the second wearable device, the method further includes: displaying a local video window and a peer video window on the second terminal device in parallel.

According to a fourth aspect, this application provides a video interaction method, applied to a second terminal device. The method includes: receiving first animation information from a first terminal device, where the first animation information is determined by the first terminal device based on a first action, the first action is obtained by the first terminal device by identifying a first video image, and the first video image is an image collected by the first terminal device in a process of a video call between the first terminal device and the second terminal device; and displaying an animation corresponding to the first animation information in a local video window of the second terminal device.

Optionally, the displaying an animation corresponding to the first animation information in a local video window of the second terminal device includes: determining an animation display area in the local video window, where the animation display area includes an area in which a human body is located; and displaying, in the animation display area, the animation corresponding to the first animation information.

Optionally, the first animation information is animation information corresponding to the first action.

Optionally, before the receiving first animation information from a first terminal device, the method further includes: receiving an interaction function enabling instruction from the first terminal device; displaying a first request message, where the first request information is used to request a user to trigger an enabling consent instruction or an enabling denial instruction; receiving the enabling consent instruction; displaying the local video window and a peer video window on the second terminal device in parallel; and sending the enabling consent instruction to the first terminal device.

Optionally, the method further includes: identifying a second video image to obtain a second action in the second video image, where the second video image is an image collected by the second terminal device in the process of the video call between the second terminal device and the first terminal device; and sending the second action to the first terminal device, where the second action is used by the first terminal device to determine, when the first terminal device determines that the first action and the second action are a combined action, animation information corresponding to the combined action as the first animation information.

Optionally, before the identifying a second video image, the method further includes: receiving an interaction function enabling instruction from the first terminal device; displaying a first request message, where the first request information is used to request a user to trigger an enabling consent instruction or an enabling denial instruction; receiving the enabling consent instruction; displaying the local video window and the peer video window on the second terminal device in parallel; and sending the enabling consent instruction to the first terminal device.

According to a fifth aspect, this application provides a terminal device, including: an obtaining module, configured to obtain first action information collected by a first wearable device and second action information collected by a second wearable device, where the first wearable device is connected to a first terminal device, and the second wearable device is connected to a second terminal device; a determining module, configured to determine a target terminal identity based on the first action information and the second action information; a sending module, configured to send the target terminal identity to the second terminal device, where the target terminal identity is used by the second terminal device to display an animation in a video window corresponding to the target terminal identity; and a display module, configured to display an animation in a video window corresponding to the target terminal identity.

Optionally, the obtaining module is specifically configured to: receive an interaction function enabling instruction, where the interaction function enabling instruction includes a timer; sending a first collection instruction to the first wearable device; sending the interaction function enabling instruction to the second terminal device, where the interaction function enabling instruction is used by the second terminal device to send a second collection instruction to the second wearable device according to the interaction function enabling instruction; determining action information collected by the first wearable device when the timer stops as the first action information; receiving action information that is sent by the second terminal device and that is collected by the second wearable device when the timer stops; and determining the action information collected by the second wearable device as the second action information.

Optionally, the display module is further configured to display, in real time, the action information collected by the first wearable device.

Optionally, the display module is further configured to display a local video window and a peer video window on the first terminal device in parallel.

According to a sixth aspect, this application provides a terminal device, including: a receiving module, configured to receive a terminal device identity from a first terminal device, where the target terminal identity is determined by the first terminal device based on first action information and second action information, the first action information is collected by a first wearable device, the second action information is collected by a second wearable device, the first wearable device is connected to the first terminal device, and the second wearable device is connected to a second terminal device; and a display module, configured to display an animation in a video window corresponding to the target terminal identity.

Optionally, the terminal device further includes a processing module, configured to: receive an interaction function enabling instruction from the first terminal device, where the interaction function enabling instruction includes a timer; send a second collection instruction to the second wearable device according to the interaction function enabling instruction; and send, to the first terminal device, action information collected by the second wearable device when the timer stops.

Optionally, the display module is further configured to display, in real time, the action information collected by the second wearable device.

Optionally, the display module is further configured to display a local video window and a peer video window on the second terminal device in parallel.

According to a seventh aspect, this application provides a terminal device, including: an identification module, configured to identify a first video image to obtain a first action in the first video image, where the first video image is an image collected by a first terminal device in a process of a video call between the first terminal device and a second terminal device; a determining module, configured to determine first animation information based on the first action; and a sending module, configured to send the first animation information to the second terminal device, where the first animation information is used by the second terminal device to display an animation corresponding to the first animation information in a local video window.

Optionally, the determining module is specifically configured to: determine animation information corresponding to the first action based on the first action and a plurality of preset actions; and determine the animation information corresponding to the first action as the first animation information.

Optionally, the terminal device further includes: a processing module, configured to: before the identification module identifies the first video image, receive an interaction function enabling instruction; send the interaction function enabling instruction to the second terminal device; receive an enabling consent instruction from the second terminal device; and display a local video window and a peer video window on the first terminal device in parallel.

Optionally, the determining module is specifically configured to: receive a second action from the second terminal device, where the second action is obtained by the second terminal device by identifying a second video image, and the second video image is an image collected by the second terminal device in the process of the video call between the second terminal device and the first terminal device; and if the first action and the second action are a combined action, determine animation information corresponding to the combined action as the first animation information.

Optionally, the terminal device further includes: a display module, configured to: determine an animation display area in the local video window on the first terminal device; and display, in the animation display area, the animation corresponding to the first animation information.

According to an eighth aspect, this application provides a terminal device, including: a receiving module, configured to receive first animation information from a first terminal device, where the first animation information is determined by the first terminal device based on a first action, the first action is obtained by the first terminal device by identifying a first video image, and the first video image is an image collected by the first terminal device in a process of a video call between the first terminal device and a second terminal device; and a display module, configured to display an animation corresponding to the first animation information in a local video window on the second terminal device.

Optionally, the display module is specifically configured to: determine an animation display area in the local video window, where the animation display area includes an area in which a human body is located; and display, in the animation display area, the animation corresponding to the first animation information.

Optionally, the first animation information is animation information corresponding to the first action.

Optionally, the display module is further configured to: receive an interaction function enabling instruction from the first terminal device; display a first request message, where the first request information is used to request a user to trigger an enabling consent instruction or an enabling denial instruction; receive the enabling consent instruction; display the local video window and a peer video window on the second terminal device in parallel; and send the enabling consent instruction to the first terminal device.

Optionally, the terminal device further includes: an identification module, configured to: identify a second video image to obtain a second action in the second video image, where the second video image is an image collected by the second terminal device in the process of the video call between the second terminal device and the first terminal device; send the second action to the first terminal device, where the second action is used by the first terminal device to determine, when the first terminal device determines that the first action and the second action are a combined action, animation information corresponding to the combined action as the first animation information.

According to a ninth aspect, this application provides a readable storage medium. The readable storage medium stores a computer program. When the computer program is executed, the video interaction method provided in the first aspect, the second aspect, the third aspect, or the fourth aspect is implemented.

According to a tenth aspect, this application provides a terminal device, including a memory and a processor. The memory is configured to store program instructions, and the processor is configured to invoke the program instructions in the memory to perform the video interaction method provided in the first aspect, the second aspect, the third aspect, or the fourth aspect.

According to the video interaction method and device provided in this application, the terminal devices and the wearable devices may be associated, users of both parties may perform sports interaction by using the wearable devices, and the terminal devices may display a corresponding animation in video windows corresponding to a winner, thereby increasing fun and interaction of a video call.

### BRIEF DESCRIPTION OF DRAWINGS

FIG. 1 is a first diagram of a system architecture according to this application;
FIG. 2 is a schematic diagram of a signaling procedure of Embodiment 1 of a video interaction method according to this application;
FIG. 3 is a first diagram of a user interface of a first terminal device according to this application;
FIG. 4 is first diagram of a user interface of a second terminal device according to this application;
FIG. 5 is a second diagram of a user interface of a first terminal device according to this application;
FIG. 6 is a second diagram of a user interface of a second terminal device according to this application;
FIG. 7 is a schematic diagram of a signaling procedure of Embodiment 2 of a video interaction method according to this application;
FIG. 8 is a third diagram of a user interface of a first terminal device according to this application;
FIG. 9 is a third diagram of a user interface of a second terminal device according to this application;
FIG. 10 is a second diagram of a system architecture according to this application;
FIG. 11 is a schematic diagram of a signaling procedure of Embodiment 3 of a video interaction method according to this application;
FIG. 12 is a fourth diagram of a user interface of a first terminal device according to this application;
FIG. 13 is a fourth diagram of a user interface of a second terminal device according to this application;
FIG. 14 is a schematic diagram of a structure of a terminal device 14 according to an embodiment of this application;
FIG. 15 is a schematic diagram of a structure of a terminal device 15 according to an embodiment of this application;
FIG. 16 is a schematic diagram of a structure of a terminal device 16 according to an embodiment of this application;
FIG. 17 is a schematic diagram of a structure of a terminal device 17 according to an embodiment of this application;
FIG. 18 is a schematic diagram of a hardware structure of a terminal device 18 according to an embodiment of this application;
FIG. 19 is a schematic diagram of a hardware structure of a terminal device 19 according to an embodiment of this application;
FIG. 20 is a schematic diagram of a hardware structure of a terminal device 20 according to an embodiment of this application; and
FIG. 21 is a schematic diagram of a hardware structure of a terminal device 21 according to an embodiment of this application.

### DESCRIPTION OF EMBODIMENTS

To make the objectives, technical solutions, and advantages of this application clearer, the following clearly and completely describes the technical solutions in this application with reference to accompanying drawings in this application. Obviously, described embodiments are a part rather than all of embodiments of this application. All other embodiments obtained by a person of ordinary skill in the art based on embodiments of this application without creative efforts shall fall within the protection scope of the present invention.

In this application, it should be explained that terms such as "first" and "second" are merely intended for a purpose of description, and shall not be understood as an indication or implication of relative importance. In this application, "at least one" refers to one or more, and "a plurality of" refers to two or more. The term "and/or" describes an association relationship between associated objects, and indicates that three relationships may exist. For example, A and/or B may represent the following cases: Only A exists, both A and B exist, and only B exists, where A and B may be singular or plural. The character "/" generally indicates a kind of "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

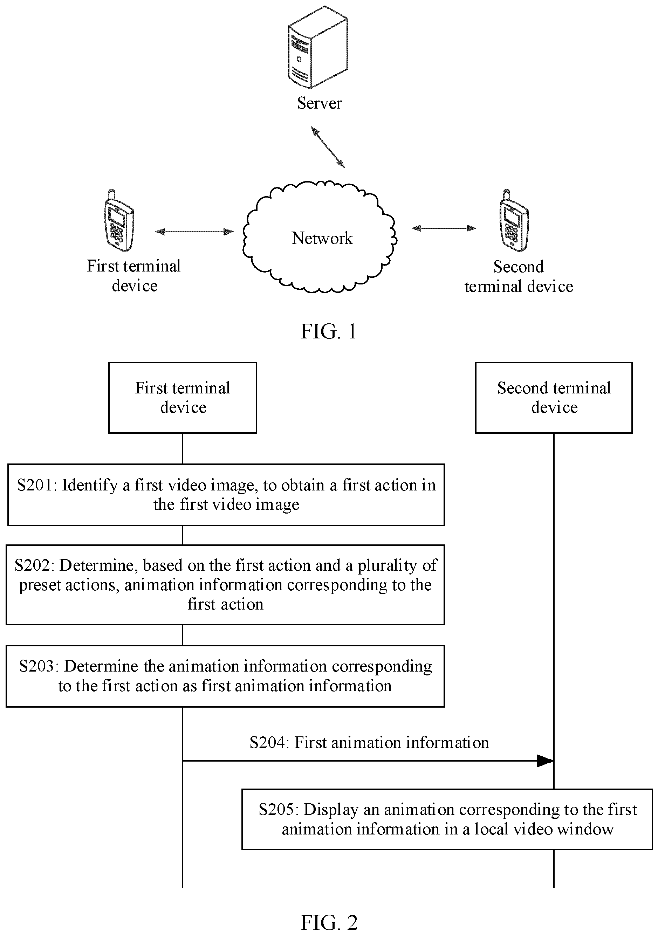

FIG. 1 is a first diagram of a system architecture according to this application. As shown in FIG. 1, the system shown in FIG. 1 may include a first terminal device, a second terminal device, and a server. The first terminal device and the second terminal device each may be a smartphone, a tablet computer, a smart screen, a notebook computer, a desktop computer, or the like. In FIG. 1, both the first terminal device and the second terminal device are smartphones. The first terminal device, the second terminal device, and the server are connected by using a network.

In a video call process, both the first terminal device and the second terminal device display two video windows. A local video window and a peer video window are displayed on the first terminal device. The local video window is used to display a video image collected by the first terminal device and a corresponding animation, and the peer video window is used to display a video image collected by the second terminal device and a corresponding animation. Similarly, the second terminal device also displays a local video window and a peer video window. The local video window is used to display the video image collected by the second terminal device and the corresponding animation, and the peer video window is used to display the video image collected by the first terminal device and the corresponding animation.

In the conventional technology, it is assumed that a user A holds the first terminal device, and a user B holds the second terminal device. In a process of a video call between the first terminal device and the second terminal device, when the user A wants to interact with the user B, the user A may perform a specific action. After collecting a video image, the first terminal device identifies the action, and if the action is a preset action, the first terminal device sends the collected video image and animation information corresponding to the preset action to the second terminal device. The second terminal device displays the video image and an animation corresponding to the animation information in the peer video window.

However, the foregoing interaction method in the conventional technology has the following problems:
1. For the user B, an animation effect can be seen in only the peer video window, and no animation is added to the local video window used to display a picture of the user B. As a result, the user B does not have a strong sense of interaction and participation.
2. Interaction behavior of jointly completing a cooperation action by the two users during a video call cannot be identified.
3. Only information collected by a camera can be processed. Action information collected by another device cannot be displayed on a video call screen.

To resolve the foregoing technical problem 1, based on the system architecture shown in FIG. 1, FIG. 2 is a schematic diagram of a signaling procedure of Embodiment 1 of a video interaction method according to this application. In this embodiment, it is assumed that a holder of a first terminal device is a user A, and a holder of a second terminal device is a user B. As shown in FIG. 2, the video interaction method provided in this embodiment includes the following steps.

S201: The first terminal device identifies a first video image, to obtain a first action in the first video image.

The first video image is an image collected by the first terminal device in a process of a video call between the first terminal device and the second terminal device.

The following describes an occasion on which the first terminal device performs the identification operation.

In a possible implementation, after a video call between the first terminal device and the second terminal device is connected, an interaction function is enabled by default, and the first terminal device may start to perform the identification operation after the video call is connected.

In another possible implementation, after a video call between the first terminal device and the second terminal device is connected, an interaction function is disabled by default. In this case, when the user A wants to interact with the user B, the user A may trigger an interaction function enabling instruction on the first terminal device. After receiving the instruction, the first terminal device sends the instruction to the second terminal device. After receiving the interaction function enabling instruction, the second terminal device displays a first request message, where the first request information is used to request a user to trigger an enabling consent instruction or an enabling denial instruction. If the user B agrees to enable the interaction function, the user B triggers the enabling consent instruction on the second terminal device, and the second terminal device sends the enabling consent instruction to the first terminal device. The first terminal device enables the interaction function according to the enabling consent instruction, and after enabling the interaction function, the first terminal device may start to perform the identification operation.

Corresponding to the foregoing first implementation, to improve an interaction experience effect, after the video call between the first terminal device and the second terminal device is connected, the first terminal device may display a peer video window and a local video window on the first terminal device in parallel, and the second terminal device may also display a peer video window and a local video window on the second terminal device in parallel.

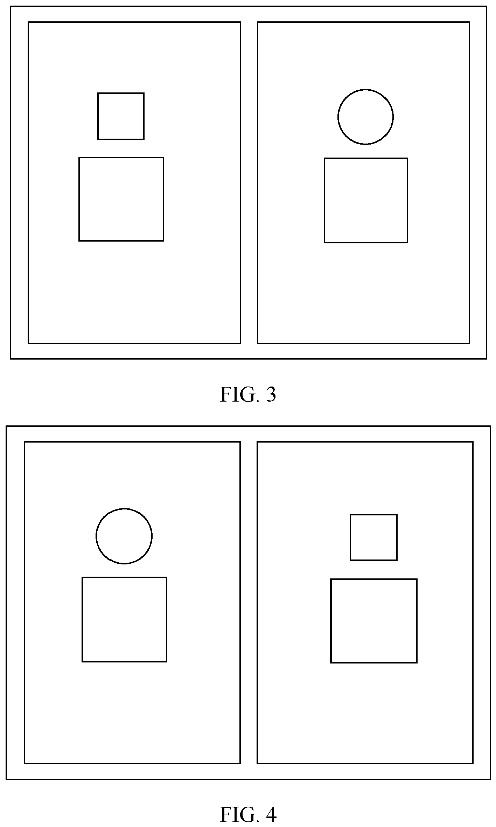

Corresponding to the foregoing second implementation, to improve an interaction experience effect, after receiving the enabling consent instruction sent by the second terminal device, the first terminal device may display a peer video window and a local video window on the first terminal device in parallel, as shown in FIG. 3. Similarly, after receiving the enabling consent instruction triggered by the user B, the second terminal device may display a peer video window and a local video window on the second terminal device in parallel, as shown in FIG. 4.

S202: The first terminal device determines, based on the first action and a plurality of preset actions, animation information corresponding to the first action.

S203: The first terminal device determines the animation information corresponding to the first action as first animation information.

In a possible implementation, a plurality of actions may be preset, and a mapping relationship between each action and animation information is set. After collecting the first video image, the first terminal device identifies the first action in the first video image; performs matching on the identified first action with the plurality of preset actions; and if the first action is a first preset action in the plurality of preset actions, determines animation information corresponding to the first preset action as the animation information corresponding to the first action; and may further determine the animation information corresponding to the first action as the first animation information.

For a manner in which the first terminal device obtains the first action through identification, refer to the conventional technology. Details are not described in this application again.

S204: The first terminal device sends the first animation information to the second terminal device.

S205: The second terminal device displays an animation corresponding to the first animation information in the local video window.

In a possible implementation, after receiving the first animation information, the second terminal device may first determine an animation display area in the local video window, where the animation display area may be, for example, an area in which a human body is located, and then display, in the animation display area, the animation corresponding to the first animation information. After receiving the first animation information, the second terminal device does not display the corresponding animation in the peer video window, but displays the corresponding animation in the local video window that is used to display a picture of the user B, thereby enhancing a sense of participation of the user and improving user experience.

It should be noted that, in order that the user A can see an animation effect generated by an action performed by the user A in an area of a body of the user B, the second terminal device simultaneously sends the collected video image and the animation superimposed on the image to the first terminal device. In this way, the first terminal device can simultaneously display the image of the user B and the superimposed animation in the peer video window, so that the user A can see the animation effect generated by the action performed by the user A in the area of the body of the user B, thereby improving user experience of the user A.

The following describes a process of S201 to S204 by using an example.

Referring to FIG. 3, FIG. 4, and the foregoing description, after a video interaction function is enabled,

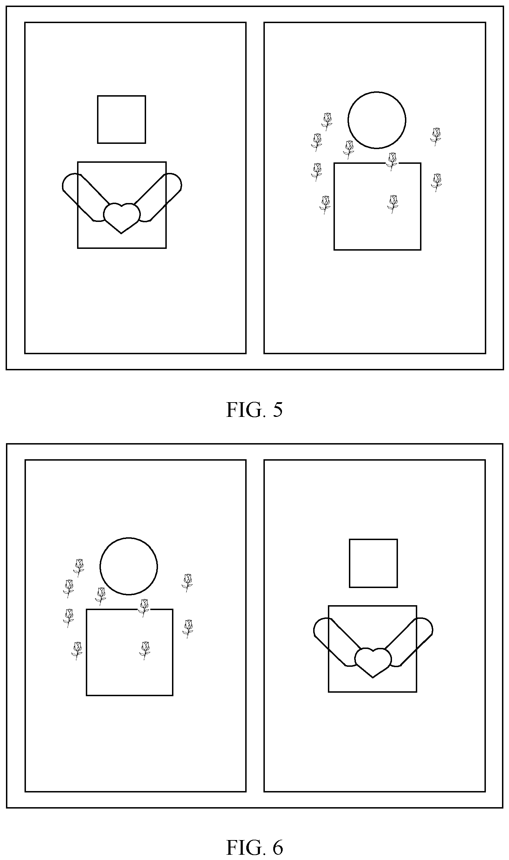

FIG. 3 is a display interface of a first terminal device, where a local video window and a peer video window are displayed in parallel, a left window is the local video window, and a right window is the peer video window. FIG. 4 is a display interface of a second terminal device. Similarly, a local video window and a peer video window on the second terminal device are also displayed in parallel, where a left window is the local video window, and a right window is the peer video window. Referring to FIG. 5, when a user A wants to interact with a user B, the user A may perform an action of showing love with both hands. After collecting a first video image, the first terminal device identifies the first video image to obtain the action of showing love with both hands. Assuming that the action of showing love with both hands is a first preset action, and animation information corresponding to the first preset action is roses, the animation information is sent to the second terminal device as first animation information. After receiving the first animation information, as shown in FIG. 6, the second terminal device detects, in the local video window, an area in which a body of the user B is located, and displays, in the area, an animation corresponding to the roses. It can be seen that, in the video interaction method provided by this embodiment, when the user A performs a specific action, the user B may see an animation effect in the local video window used to display a picture of the user B, and a sense of participation of the user B is enhanced.

It should be noted that, in this embodiment, the solution of this application is described by using an example in which the user A performs an action to implement interaction with the user B. This is similar to a process in which the user B performs an action to implement interaction with the user A. Details are not described herein again in this application.

According to the video interaction method provided in this embodiment, after collecting the first video image, the first terminal device identifies the first video image to obtain the first action in the first video image, and sends the animation information corresponding to the action to the second terminal device. The second terminal device detects the animation display area in the local video window, and displays the animation corresponding to the animation information in the animation display area, so that the user B can view the animation effect in the local video window used to display the picture of the user B, thereby improving the sense of participation of the user B.

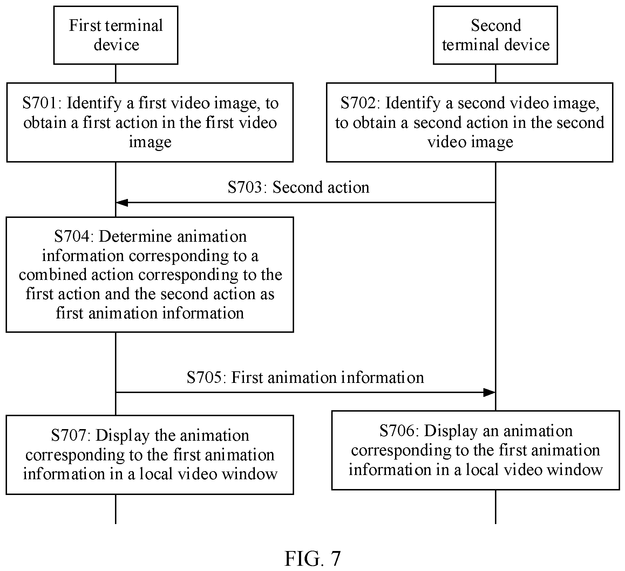

To resolve the foregoing technical problem 2, FIG. 7 is a schematic diagram of a signaling procedure of Embodiment 2 of a video interaction method according to this application. Similarly, in this embodiment, it is assumed that a holder of a first terminal device is a user A, and a holder of a second terminal device is a user B. As shown in FIG. 7, the video interaction method provided in this embodiment includes the following steps.

S701: The first terminal device identifies a first video image, to obtain a first action in the first video image.

S702: The second terminal device identifies a second video image, to obtain a second action in the second video image.

The first video image is an image collected by the first terminal device in a process of a video call between the first terminal device and the second terminal device, and the second video image is an image collected by the second terminal device in the process of the video call between the second terminal device and the first terminal device.

The following describes an occasion on which the first terminal device and the second terminal device perform identification operations.

In a possible implementation, after the video call between the first terminal device and the second terminal device is connected, an interaction function is enabled by default. In this case, after the video call is connected, the first terminal device may start to perform the identification operation on the first video image, and the second terminal device may start to perform the identification operation on the second video image.

In another possible implementation, after the video call between the first terminal device and the second terminal device is connected, an interaction function is disabled by default. In this case, the user A or the user B may trigger a video interaction enabling instruction. For example, when the user A wants to interact with the user B, the user A may trigger an interaction function enabling instruction on the first terminal device. After receiving the instruction, the first terminal device sends the instruction to the second terminal device. After receiving the interaction function enabling instruction, the second terminal device displays a first request message, where the first request information is used to request a user to trigger an enabling consent instruction or an enabling denial instruction. If the user B agrees to enable the interaction function, the user B triggers the enabling consent instruction on the second terminal device. After receiving the enabling consent instruction, the second terminal device may start to perform the identification operation on the second video image. In addition, the second terminal device sends the enabling consent instruction to the first terminal device, and after receiving the enabling consent instruction, the first terminal device may start to perform the identification operation on the first video image.

For an implementation in which the first terminal device identifies the first video image to obtain the first action and the second terminal device identifies the second video image to obtain the second action, refer to the conventional technology. Details are not described herein in this application.

S703: The second terminal device sends the second action to the first terminal device.

Specifically, after receiving the second action, the first terminal device determines whether the first action and the second action are a combined action. If the first action and the second action are the combined action, S704 is performed.

S704: Determine animation information corresponding to the combined action as first animation information.

S705: The first terminal device sends the first animation information to the second terminal device.

S706: The second terminal device displays an animation corresponding to the first animation information in a local video window.

In a possible implementation, after receiving the first animation information, the second terminal device may first determine an animation display area in the local video window, where the animation display area may be, for example, an area in which a human body is located, and then display, in the animation display area, the animation corresponding to the first animation information.

S707: The first terminal device displays the animation corresponding to the first animation information in a local video window.

Similar to S706, the first terminal device may first determine an animation display area in the local video window, where the animation display area may be, for example, an area in which a human body is located, and then display, in the animation display area, the animation corresponding to the first animation information.

It should be noted that, in order that the user A can see an animation effect generated by the combined action in an area of a body of the user B, the second terminal device simultaneously sends the collected video image and the animation superimposed on the image to the first terminal device. In this way, the first terminal device can simultaneously display the image of the user B and the superimposed animation in a peer window, so that the user A can see the animation effect generated by the combined action in the area of the body of the user B, thereby improving user experience of the user A.

Similarly, in order that the user B can see an animation effect generated by the combined action in an area of a body of the user A, the first terminal device simultaneously sends the collected video image and the animation superimposed on the image to the second terminal device. In this way, the second terminal device can simultaneously display the image of the user A and the superimposed animation in a peer window, so that the user B can see the animation effect generated by the combined action in the area of the body of the user A, and user experience of the user A is also improved.

The following describes a process of S701 to S707 by using an example.

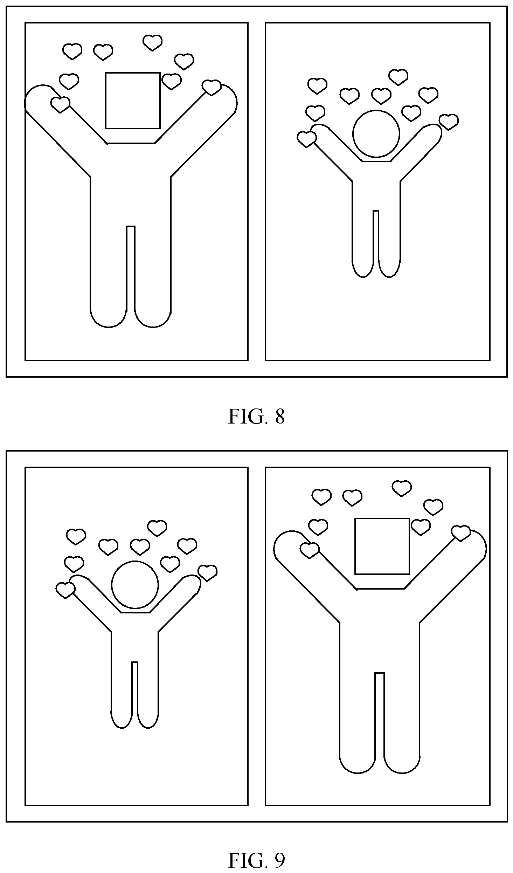

It is assumed that a user A and a user B are an elder and a child. When the user A and the user B make a video call at home by using a smart screen, refer to FIG. 3 and FIG. 4. After an interaction function is enabled, a local video window and a peer video window of a first terminal device are displayed in parallel, and a local video window and a peer video window of a second terminal device are also displayed in parallel. Referring to FIG. 8, when the user A and the user B want to interact with each other, the user A and the user B may perform a hug action of opening arms in a same time period. After collecting a first video image, the first terminal device identifies the first video image to obtain a hug action in the first video image. After collecting a second video image, the second terminal device identifies the second video image to obtain a hug action in the second video image, and sends the hug action to the first terminal device. It is assumed that the hug action at both ends is a combined action, and animation information corresponding to the combined action is love surrounding. The first terminal device displays an animation corresponding to the love surrounding in the local video window, as shown in FIG. 8. In addition, the animation information is sent to the second terminal device. After receiving the animation information, the second terminal device also displays the animation corresponding to the love surrounding in the local video window, as shown in FIG. 9.

Still referring to FIG. 8 and FIG. 9, for the peer video window of the first terminal device, because the second terminal device simultaneously sends the collected video image and the superimposed animation to the first terminal device, the peer video window of the first terminal device may simultaneously display the video image and the animation, so that the user A can see an animation effect of the combined action around a body of the user B. Similarly, for the peer video window of the second terminal device, because the first terminal device simultaneously sends the collected video image and the superimposed animation to the second terminal device, the peer video window of the second terminal device may simultaneously display the video image and the animation, so that the user B can see an animation effect of the combined action around a body of the user A. User experience of both parties is improved.

It should be noted that in this embodiment, the solution of this application is described by using an example in which the first terminal device performs determining of the combined action. The determining of the combined action may alternatively be performed by the second terminal device, or may be performed by a server. A determining process is similar to that in this embodiment, and details are not described herein again in this application.

According to the video interaction method provided in this embodiment, the combined action that is jointly completed by two users in the process of the video call can be identified, and both users can see the animation effect generated by the combined action, thereby improving a sense of participation of the two users.

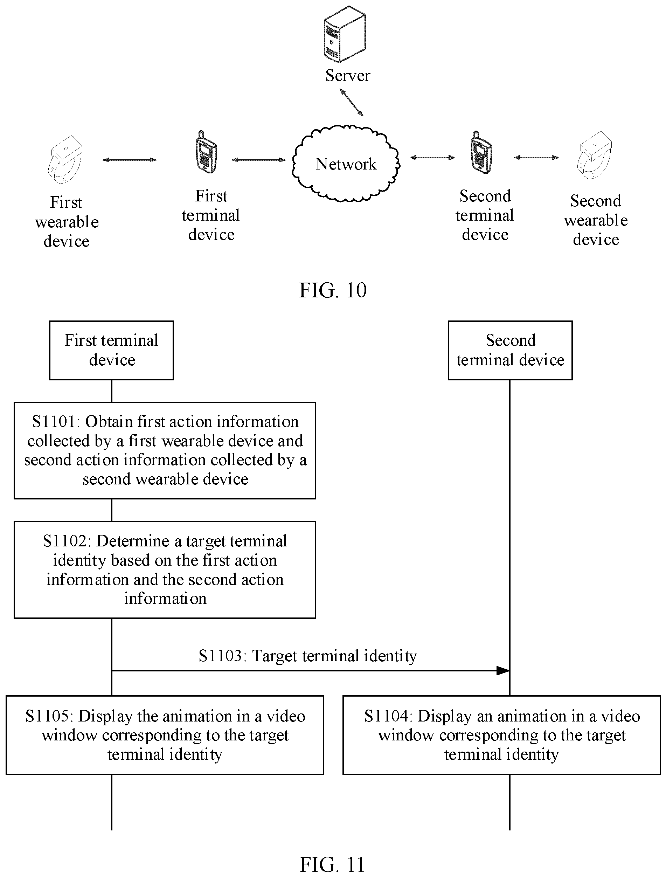

FIG. 10 is a second diagram of a system architecture according to this application. Based on the system architecture shown in FIG. 1, the system shown in FIG. 10 further includes a first wearable device and a second wearable device. The first wearable device is wirelessly connected to the first terminal device, and the second wearable device is wirelessly connected to the second terminal device. The first wearable device and the second wearable device each may be a band, a watch, smart glasses, or the like.

To resolve the foregoing technical problem 3, based on the system architecture shown in FIG. 10, FIG. 11 is a schematic diagram of a signaling procedure of Embodiment 3 of a video interaction method according to this application. In this embodiment, it is assumed that a holder of a first terminal device is a user A, the user A wears the first wearable device, a holder of a second terminal device is a user B, and the user B wears the second wearable device. As shown in FIG. 11, the video interaction method provided in this embodiment includes the following steps.

S1101: The first terminal device obtains first action information collected by the first wearable device and second action information collected by the second wearable device.

The following describes an implementation in which the first terminal device obtains the first action information collected by the first wearable device and the second action information collected by the second wearable device.

When both parties want to interact with each other in a video call process, either party may trigger an interaction function enabling instruction, and the interaction function enabling instruction may carry a timer. In this embodiment, that the user A triggers the interaction function enabling instruction is used as an example. After receiving the interaction function enabling instruction triggered by the user A, the first terminal device sends a first collection instruction to the first wearable device, so that the first wearable device starts to collect action information. In addition, the first terminal device sends the interaction function enabling instruction to the second terminal device. After receiving the interaction function enabling instruction, the second terminal device sends a second collection instruction to the second wearable device, so that the second wearable device starts to collect action information. When the timer stops, the first terminal device determines the action information collected by the first wearable device as the first action information, and determines the action information collected by the second wearable device as the second action information.

In a possible implementation, after receiving the interaction function enabling instruction triggered by the user A, the first terminal device may display a local video window and a peer video window on the first terminal device in parallel to optimize an experience effect. After receiving the interaction function enabling instruction from the first terminal device, the second terminal device may also display a local video window and a peer video window in parallel.

In a possible implementation, in order that the user A and the user B can view the action information of the user A and the user B in real time, the action information collected by the first wearable device may be transmitted to the first terminal device in real time, and the first terminal device displays the action information in a local window in real time. In addition, the first terminal device simultaneously sends a collected video image and the action information to the second terminal device, so that the second terminal device not only displays the video image, but also displays the action information of the user A in the peer video window. Similarly, the action information collected by the second wearable device may be transmitted to the second terminal device in real time, and the second terminal device displays the action information in real time in a local window. In addition, the second terminal device simultaneously sends the collected video image and the action information to the first terminal device, so that the first terminal device not only displays the video image but also displays the action information of the user B in the peer video window. In this way, the user A may view the action information of the user A and the user B in real time on the first terminal device, and the user B may also view the action information of the user B and the user A in real time on the second terminal device.

S1102: The first terminal device determines a target terminal identity based on the first action information and the second action information.

S1103: The first terminal device sends the target terminal identity to the second terminal device.

S 1104: The second terminal device displays an animation in a video window corresponding to the target terminal identity.

S 1105: The first terminal device displays the animation in a video window corresponding to the target terminal identity.

The following describes a process of S1101 to S1105 by using an example.

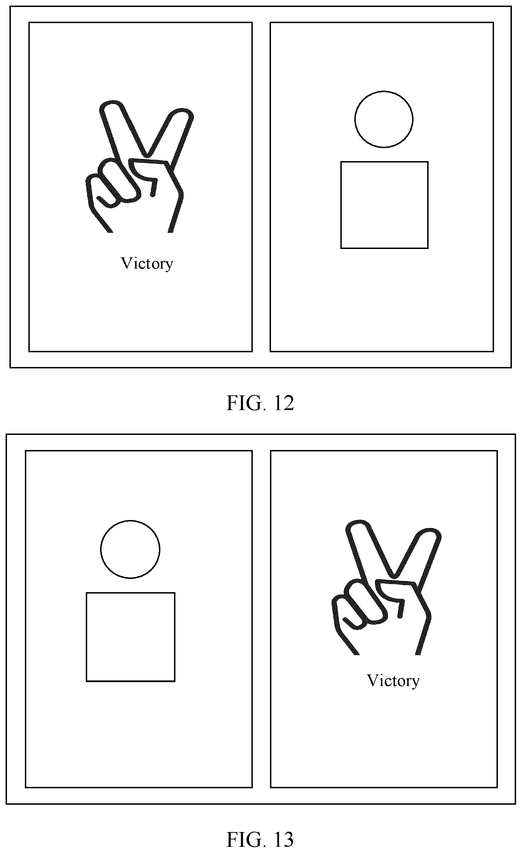

It is assumed that a user A and a user B make a date to work out online, and perform a video call at home by using a smart screen. When the user A and the user B want to compete in push-ups, either party may trigger an interactive function enabling instruction. The interactive function enabling instruction may carry a timer. For example, the timer is 1 minute. In this embodiment, that the user A triggers the interaction function enabling instruction is used as an example. After receiving the interaction function enabling instruction triggered by the user A, a first terminal device sends a first collection instruction to a first wearable device, so that the first wearable device starts to collect action information. In addition, the first terminal device sends the interaction function enabling instruction to a second terminal device. After receiving the interaction function enabling instruction, the second terminal device sends a second collection instruction to a second wearable device, so that the second wearable device starts to collect action information. When the timer stops timing, assuming that a quantity of push-ups collected by the first wearable device is 50 and a quantity of push-ups collected by the second wearable device is 45, and the first terminal device determines the user A as a winner after comparison, an identity of the first terminal device is used as a target terminal identity. For the first terminal device, if a video window corresponding to the target terminal identity is a local video window, the first terminal device displays an animation in the local video window, as shown in FIG. 12. For the second terminal device, if a video window corresponding to the target terminal identity is a peer video window, the second terminal device displays an animation in the peer video window, as shown in FIG. 13.

In the video interaction method provided in this embodiment, the terminal devices and the wearable devices may be associated, users of both parties may perform sports interaction by using the wearable devices, and the terminal devices may display a corresponding animation in video windows corresponding to a winner, thereby increasing fun and interaction of a video call.

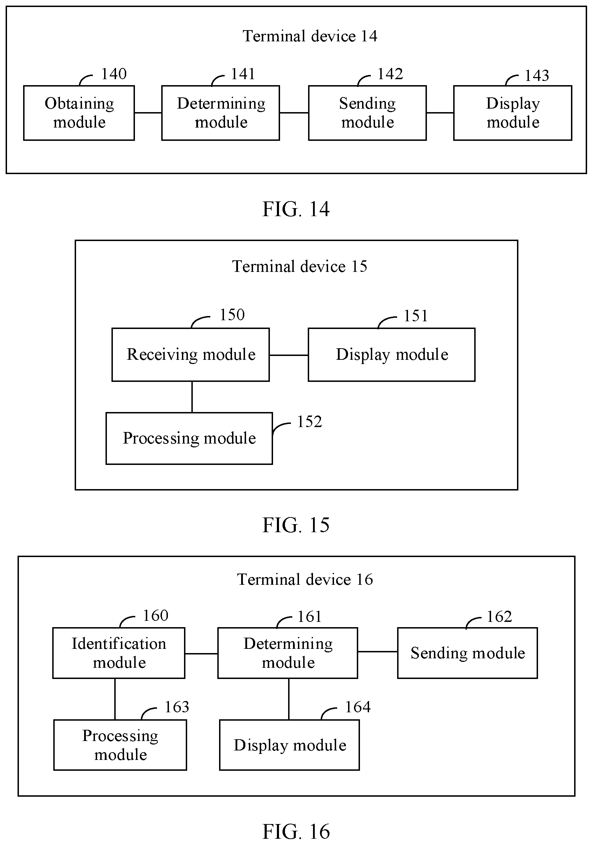

FIG. 14 is a schematic diagram of a structure of a terminal device 14 according to an embodiment of this application. As shown in FIG. 14, the terminal device 14 provided in this application includes:
an obtaining module 140, configured to obtain first action information collected by a first wearable device and second action information collected by a second wearable device, where the first wearable device is connected to a first terminal device, and the second wearable device is connected to a second terminal device;
a determining module 141, configured to determine a target terminal identity based on the first action information and the second action information;
a sending module 142, configured to send the target terminal identity to the second terminal device, where the target terminal identity is used by the second terminal device to display an animation in a video window corresponding to the target terminal identity; and
a display module 143, configured to display the animation in a video window corresponding to the target terminal identity.

Optionally, the obtaining module 140 is specifically configured to:
receive an interaction function enabling instruction, where the interaction function enabling instruction includes a timer;
send a first collection instruction to the first wearable device;
send the interaction function enabling instruction to the second terminal device, where the interaction function enabling instruction is used by the second terminal device to send a second collection instruction to the second wearable device according to the interaction function enabling instruction;
determine action information collected by the first wearable device when the timer stops as the first action information;
receive action information that is sent by the second terminal device and that is collected by the second wearable device when the timer stops; and
determine the action information collected by the second wearable device as the second action information.

Optionally, the display module 143 is further configured to:
display, in real time, the action information collected by the first wearable device.

Optionally, the display module 143 is further configured to:
display a local video window and a peer video window on the first terminal device in parallel.

The terminal device provided in this application may perform steps performed by the first terminal device in Embodiment 3 of the method. Implementation principles and beneficial effects of the terminal device are similar to those of the method embodiment. Details are not described herein again.

FIG. 15 is a schematic diagram of a structure of a terminal device 15 according to an embodiment of this application. As shown in FIG. 15, the terminal device 15 provided in this application includes:
a receiving module 150, configured to receive a terminal device identity from a first terminal device, where the target terminal identity is determined by the first terminal device based on first action information and second action information, the first action information is collected by a first wearable device, the second action information is collected by a second wearable device, the first wearable device is connected to the first terminal device, and the second wearable device is connected to a second terminal device; and
a display module 151, configured to display an animation in a video window corresponding to the target terminal identity.

Optionally, the terminal device 15 further includes:
a processing module 152, configured to: receive an interaction function enabling instruction from the first terminal device, where the interaction function enabling instruction includes a timer;
send a second collection instruction to the second wearable device according to the interaction function enabling instruction; and
send, to the first terminal device, action information collected by the second wearable device when the timer stops.

Optionally, the display module 151 is further configured to:
display, in real time, the action information collected by the second wearable device.

Optionally, the display module 151 is further configured to:
display a local video window and a peer video window on the second terminal device in parallel.

The terminal device provided in this application may perform steps performed by the second terminal device in Embodiment 3 of the method. Implementation principles and beneficial effects of the terminal device are similar to those of the method embodiment. Details are not described herein again.

FIG. 16 is a schematic diagram of a structure of a terminal device 16 according to an embodiment of this application. As shown in FIG. 16, the terminal device 16 provided in this application includes:
an identification module 160, configured to identify a first video image to obtain a first action in a first video image, where the first video image is an image collected by a first terminal device in a process of a video call between the first terminal device and a second terminal device;
a determining module 161, configured to determine first animation information based on the first action; and
a sending module 162, configured to send the first animation information to the second terminal device, where the first animation information is used by the second terminal device to display, in a local video window, an animation corresponding to the first animation information.

Optionally, the determining module 161 is specifically configured to:
determine, based on the first action and a plurality of preset actions, animation information corresponding to the first action; and

Determine the animation information corresponding to the first action as the first animation information.

Optionally, the terminal device 16 further includes:
a processing module 163, configured to: receive an interaction function enabling instruction before the identification module identifies the first video image;
send the interaction function enabling instruction to the second terminal device;
receive an enabling consent instruction from the second terminal device; and display a local video window and a peer video window on the first terminal device in parallel.

Optionally, the determining module 161 is specifically configured to:
receive a second action from the second terminal device, where the second action is obtained by the second terminal device by identifying a second video image, and the second video image is an image collected by the second terminal device in the process of the video call between the second terminal device and the first terminal device; and
if the first action and the second action are a combined action, determine animation information corresponding to the combined action as the first animation information.

Optionally, the terminal device 16 further includes:
a display module 164, configured to determine an animation display area in a local video window on the first terminal device; and
display, in the animation display area, an animation corresponding to the first animation information.

The terminal device provided in this application may perform steps performed by the first terminal device in Embodiment 1 or Embodiment 2 of the method. Implementation principles and beneficial effects of the terminal device are similar to those of the method embodiment. Details are not described herein again.

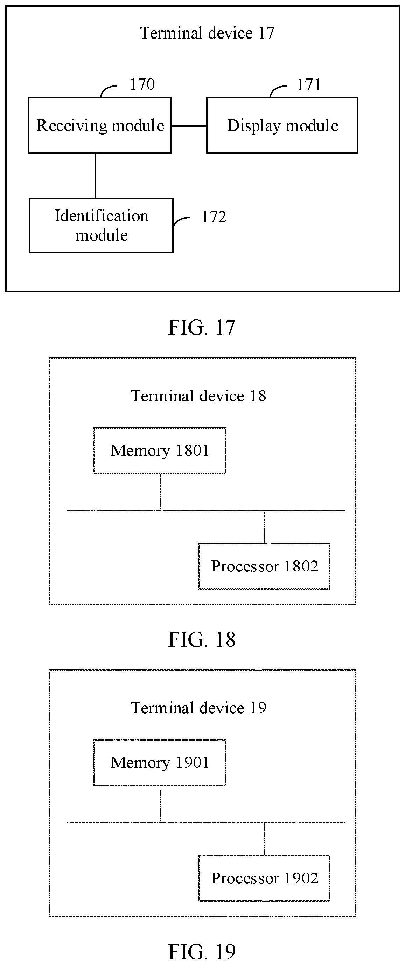

FIG. 17 is a schematic diagram of a structure of a terminal device 17 according to an embodiment of this application. As shown in FIG. 17, the terminal device 17 provided in this application includes:
a receiving module 170, configured to receive first animation information from a first terminal device, where the first animation information is determined by the first terminal device based on a first action, the first action is obtained by the first terminal device by identifying a first video image, and the first video image is an image collected by the first terminal device in a process of a video call between the first terminal device and a second terminal device; and
a display module 171, configured to display an animation corresponding to the first animation information in a local video window on the second terminal device.

Optionally, the display module 171 is specifically configured to:
determine an animation display area in the local video window, where the animation display area includes an area in which a human body is located; and
display, in the animation display area, the animation corresponding to the first animation information.

Optionally, the first animation information is animation information corresponding to the first action.

Optionally, the display module 171 is further configured to:
receive an interaction function enabling instruction from the first terminal device;
display a first request message, where the first request information is used to request a user to trigger an enabling consent instruction or an enabling denial instruction;
receive the enabling consent instruction;
display the local video window and a peer video window on the second terminal device in parallel; and send the enabling consent instruction to the first terminal device.

Optionally, the terminal device further includes:
an identification module 172, configured to: identify a second video image to obtain a second action in the second video image, where the second video image is an image collected by the second terminal device in the process of the video call between the second terminal device and the first terminal device; and send the second action to the first terminal device, where the second action is used by the first terminal device to determine, when the first terminal device determines that the first action and the second action are a combined action, animation information corresponding to the combined action as the first animation information.

The terminal device provided in this application may perform steps performed by the second terminal device in Embodiment 1 or Embodiment 2 of the method. Implementation principles and beneficial effects of the terminal device are similar to those of the method embodiment. Details are not described herein again.

FIG. 18 is a schematic diagram of a hardware structure of a terminal device 18 according to an embodiment of this application. As shown in FIG. 18, the terminal device 18 includes a memory 1801 and a processor 1802. The memory 1801 is configured to store program instructions, and the processor 1802 is configured to invoke the program instructions in the memory 1801 to perform the steps performed by the first terminal device in Embodiment 1 or Embodiment 2 of the method.

FIG. 19 is a schematic diagram of a hardware structure of a terminal device 19 according to an embodiment of this application. As shown in FIG. 19, the terminal device 19 includes a memory 1901 and a processor 1902. The memory 1901 is configured to store program instructions, and the processor 1902 is configured to invoke the program instructions in the memory 1901 to perform the steps performed by the second terminal device in Embodiment 1 or Embodiment 2 of the method.

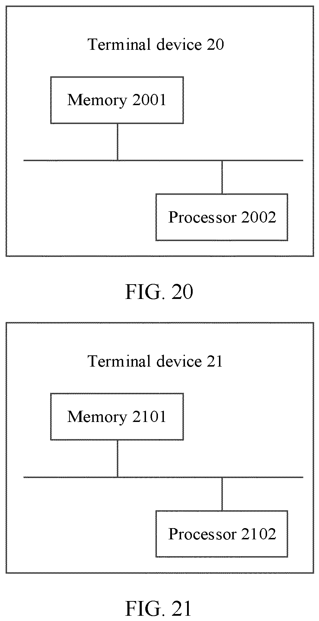

FIG. 20 is a schematic diagram of a hardware structure of a terminal device 20 according to an embodiment of this application. As shown in FIG. 20, the terminal device 20 includes a memory 2001 and a processor 2002. The memory 2001 is configured to store program instructions, and the processor 2002 is configured to invoke the program instructions in the memory 2001 to perform the steps performed by the first terminal device in Embodiment 3 of the method.

FIG. 21 is a schematic diagram of a hardware structure of a terminal device 21 according to an embodiment of this application. As shown in FIG. 21, the terminal device 21 includes a memory 2101 and a processor 2102. The memory 2101 is configured to store program instructions, and the processor 2102 is configured to invoke the program instructions in the memory 2101 to perform the steps performed by the second terminal device in Embodiment 3 of the method.

This application further provides a readable storage medium. The readable storage medium stores a computer program. When the computer program is executed, the steps performed by the first terminal device in Embodiment 1 or Embodiment 2 of the method are implemented.

This application further provides a readable storage medium. The readable storage medium stores a computer program. When the computer program is executed, the steps performed by the second terminal device in Embodiment 1 or Embodiment 2 of the method are implemented.

This application further provides a readable storage medium. The readable storage medium stores a computer program. When the computer program is executed, steps performed by the first terminal device in Embodiment 3 of the method are implemented.

This application further provides a readable storage medium. The readable storage medium stores a computer program. When the computer program is executed, the steps performed by the second terminal device in Embodiment 3 of the method are implemented.

In the several embodiments according to this application, it should be understood that the disclosed device and method may be implemented in another manner. For example, the described device embodiment is only an example. For example, division into the modules is merely logical function division and there may be another division manner during actual implementation. For example, a plurality of modules or components may be combined or integrated into another system, or some features may be ignored or not implemented. In addition, the displayed or discussed mutual couplings or direct couplings or communication connections may be implemented by using some interfaces. The indirect couplings or communication connections between the apparatuses or modules may be implemented in electronic, mechanical, or other forms.

The modules described as discrete components may or may not be physically separate, and components displayed as the modules may or may not be physical units. That is, the components may be located in one position, or may be distributed on a plurality of network units. Some or all of the modules may be selected based on actual requirements to achieve the objectives of the solutions in embodiments of this application.

In addition, function modules in embodiments of this application may be integrated into one processing unit, or each of the modules may stand alone physically, or two or more modules may be integrated into one unit. The unit formed by the modules may be implemented in a form of hardware, or may be implemented in a form of hardware in addition to a software functional unit.

When the foregoing integrated module is implemented in a form of a software functional module, the integrated unit may be stored in a computer-readable storage medium. The software function module is stored in a storage medium and includes several instructions to enable a computer device (which may be a personal computer, a server, or a network device) or a processor (English: processor) to perform some steps of the methods in the embodiments of this application.

It should be understood that the processor may be a central processing unit (central processing unit, CPU), or may be another general-purpose processor, a digital signal processor (digital signal processor, DSP), an application-specific integrated circuit (application specific integrated circuit, ASIC), or the like. The general-purpose processor may be a microprocessor, or the processor may be any conventional processor or the like. The steps of the methods disclosed with reference to the present invention may be directly implemented by a hardware processor, or may be implemented by a combination of hardware and software modules in a processor.

The memory may include a high-speed RAM memory, or may include a non-volatile memory NVM such as at least one magnetic disk memory, or may include a USB flash drive, a removable hard disk, a read-only memory, a magnetic disk, an optical disc, or the like.

The bus may be an industry standard architecture (industry standard architecture, ISA) bus, a peripheral component interconnect (peripheral component, PCI) bus, an extended industry standard architecture (extended industry standard architecture, EISA) bus, or the like. The communications bus may be classified into an address bus, a data bus, a control bus, or the like. For ease of representation, the bus in the accompanying drawings in this application is not limited to only one bus or only one type of bus.

All or some of the embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions described in embodiments of this application are generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any available medium accessible by a computer, or a data storage device, such as a server or a data center, integrating one or more usable media. The available medium may be a magnetic medium (for example, a floppy disk, a hard disk, or a magnetic tape), an optical medium (for example, a DVD), a semiconductor medium (for example, a solid-state drive solid-state disk, SSD), or the like.

This application provides a video interaction method and a device, to enrich an interaction function in a process of a video call.

According to a first aspect, this application provides a video interaction method, applied to a first terminal device. The method includes: obtaining first action information collected by a first wearable device and second action information collected by a second wearable device, where the first wearable device is connected to the first terminal device, and the second wearable device is connected to a second terminal device; determining a target terminal identity based on the first action information and the second action information; sending the target terminal identity to the second terminal device, where the target terminal identity is used by the second terminal device to display an animation in a video window corresponding to the target terminal identity; and displaying the animation in the video window corresponding to the target terminal identity.

In the video interaction method, the terminal devices and the wearable devices may be associated. Users of both parties may perform sports interaction by using the wearable devices, and the terminal devices may display a corresponding animation in video windows corresponding to a winner, thereby increasing fun and interaction of a video call.

Optionally, the obtaining first action information collected by a first wearable device and second action information collected by a second wearable device includes: receiving an interaction function enabling instruction, where the interaction function enabling instruction includes a timer; sending a first collection instruction to the first wearable device; sending the interaction function enabling instruction to the second terminal device, where the interaction function enabling instruction is used by the second terminal device to send a second collection instruction to the second wearable device according to the interaction function enabling instruction; determining action information collected by the first wearable device when the timer stops as the first action information; receiving action information that is sent by the second terminal device and that is collected by the second wearable device when the timer stops; and determining the action information collected by the second wearable device as the second action information.

Optionally, the method further includes: displaying, in real time, the action information collected by the first wearable device.

Optionally, before the displaying, in real time, the action information collected by the first wearable device, the method further includes: displaying a local video window and a peer video window that are on the first terminal device in parallel, so that a better interaction experience effect can be achieved.

According to a second aspect, this application provides a video interaction method, applied to a first terminal device. The method includes: identifying a first video image to obtain a first action in the first video image, where the first video image is an image collected by the first terminal device in a process of a video call between the first terminal device and a second terminal device; determining first animation information based on the first action; and sending the first animation information to the second terminal device, where the first animation information is used by the second terminal device to display, in a local video window, an animation corresponding to the first animation information.

In the foregoing method, a peer user can see an animation effect in a local video window used to display a picture of the peer user, thereby improving a sense of participation of the peer user.

Optionally, the determining first animation information based on the first action includes: determining, based on the first action and a plurality of preset actions, animation information corresponding to the first action; and determining the animation information corresponding to the first action as the first animation information.

Optionally, before the identifying a first video image, the method further includes: receiving an interaction function enabling instruction; sending the interaction function enabling instruction to the second terminal device; receiving an enabling consent instruction from the second terminal device; and displaying a local video window and a peer video window on the first terminal device in parallel.

Optionally, the determining first animation information based on the first action includes: receiving a second action from the second terminal device, where the second action is obtained by the second terminal device by identifying a second video image, and the second video image is an image collected by the second terminal device in the process of the video call between the second terminal device and the first terminal device; and if the first action and the second action are a combined action, determining animation information corresponding to the combined action as the first animation information.

According to the video interaction method, the combined action that is jointly completed by two users in the process of the video call can be identified, and both users can see the animation effect generated by the combined action, thereby improving a sense of participation of the two users.

Optionally, before the identifying a first video image, the method further includes: receiving an interaction function enabling instruction; sending the interaction function enabling instruction to the second terminal device; receiving an enabling consent instruction from the second terminal device; and displaying a local video window and a peer video window on the first terminal device in parallel.

Optionally, the method further includes: determining an animation display area in the local video window on the first terminal device; and displaying, in the animation display area, the animation corresponding to the first animation information.

According to a third aspect, this application provides a video interaction method, applied to a second terminal device. The method includes: receiving a terminal device identity from a first terminal device, where the target terminal identity is determined by the first terminal device based on first action information and second action information, the first action information is collected by a first wearable device, the second action information is collected by a second wearable device, the first wearable device is connected to the first terminal device, and the second wearable device is connected to the second terminal device; and displaying an animation in a video window corresponding to the target terminal.

Optionally, before the receiving a target terminal identity from a first terminal device, the method further includes: receiving an interaction function enabling instruction from the first terminal device, where the interaction function enabling instruction includes a timer; sending a second collection instruction to the second wearable device according to the interaction function enabling instruction; and sending, to the first terminal device, action information collected by the second wearable device when the timer stops.

Optionally, the method further includes: displaying, in real time, the action information collected by the second wearable device.

Optionally, before the displaying, in real time, the action information collected by the second wearable device, the method further includes: displaying a local video window and a peer video window on the second terminal device in parallel.

According to a fourth aspect, this application provides a video interaction method, applied to a second terminal device. The method includes: receiving first animation information from a first terminal device, where the first animation information is determined by the first terminal device based on a first action, the first action is obtained by the first terminal device by identifying a first video image, and the first video image is an image collected by the first terminal device in a process of a video call between the first terminal device and the second terminal device; and displaying an animation corresponding to the first animation information in a local video window of the second terminal device.

Optionally, the displaying an animation corresponding to the first animation information in a local video window of the second terminal device includes: determining an animation display area in the local video window, where the animation display area includes an area in which a human body is located; and displaying, in the animation display area, the animation corresponding to the first animation information.

Optionally, the first animation information is animation information corresponding to the first action.

Optionally, before the receiving first animation information from a first terminal device, the method further includes: receiving an interaction function enabling instruction from the first terminal device; displaying a first request message, where the first request information is used to request a user to trigger an enabling consent instruction or an enabling denial instruction; receiving the enabling consent instruction; displaying the local video window and a peer video window on the second terminal device in parallel; and sending the enabling consent instruction to the first terminal device.

Optionally, the method further includes: identifying a second video image to obtain a second action in the second video image, where the second video image is an image collected by the second terminal device in the process of the video call between the second terminal device and the first terminal device; and sending the second action to the first terminal device, where the second action is used by the first terminal device to determine, when the first terminal device determines that the first action and the second action are a combined action, animation information corresponding to the combined action as the first animation information.

Optionally, before the identifying a second video image, the method further includes: receiving an interaction function enabling instruction from the first terminal device; displaying a first request message, where the first request information is used to request a user to trigger an enabling consent instruction or an enabling denial instruction; receiving the enabling consent instruction; displaying the local video window and the peer video window on the second terminal device in parallel; and sending the enabling consent instruction to the first terminal device.

According to a fifth aspect, this application provides a terminal device, including: an obtaining module, configured to obtain first action information collected by a first wearable device and second action information collected by a second wearable device, where the first wearable device is connected to a first terminal device, and the second wearable device is connected to a second terminal device; a determining module, configured to determine a target terminal identity based on the first action information and the second action information; a sending module, configured to send the target terminal identity to the second terminal device, where the target terminal identity is used by the second terminal device to display an animation in a video window corresponding to the target terminal identity; and a display module, configured to display an animation in a video window corresponding to the target terminal identity.

Optionally, the obtaining module is specifically configured to: receive an interaction function enabling instruction, where the interaction function enabling instruction includes a timer; sending a first collection instruction to the first wearable device; sending the interaction function enabling instruction to the second terminal device, where the interaction function enabling instruction is used by the second terminal device to send a second collection instruction to the second wearable device according to the interaction function enabling instruction; determining action information collected by the first wearable device when the timer stops as the first action information; receiving action information that is sent by the second terminal device and that is collected by the second wearable device when the timer stops; and determining the action information collected by the second wearable device as the second action information.

Optionally, the display module is further configured to display, in real time, the action information collected by the first wearable device.

Optionally, the display module is further configured to display a local video window and a peer video window on the first terminal device in parallel.

According to a sixth aspect, this application provides a terminal device, including: a receiving module, configured to receive a terminal device identity from a first terminal device, where the target terminal identity is determined by the first terminal device based on first action information and second action information, the first action information is collected by a first wearable device, the second action information is collected by a second wearable device, the first wearable device is connected to the first terminal device, and the second wearable device is connected to a second terminal device; and a display module, configured to display an animation in a video window corresponding to the target terminal identity.

Optionally, the terminal device further includes a processing module, configured to: receive an interaction function enabling instruction from the first terminal device, where the interaction function enabling instruction includes a timer; send a second collection instruction to the second wearable device according to the interaction function enabling instruction; and send, to the first terminal device, action information collected by the second wearable device when the timer stops.

Optionally, the display module is further configured to display, in real time, the action information collected by the second wearable device.

Optionally, the display module is further configured to display a local video window and a peer video window on the second terminal device in parallel.

According to a seventh aspect, this application provides a terminal device, including: an identification module, configured to identify a first video image to obtain a first action in the first video image, where the first video image is an image collected by a first terminal device in a process of a video call between the first terminal device and a second terminal device; a determining module, configured to determine first animation information based on the first action; and a sending module, configured to send the first animation information to the second terminal device, where the first animation information is used by the second terminal device to display an animation corresponding to the first animation information in a local video window.

Optionally, the determining module is specifically configured to: determine animation information corresponding to the first action based on the first action and a plurality of preset actions; and determine the animation information corresponding to the first action as the first animation information.

Optionally, the terminal device further includes: a processing module, configured to: before the identification module identifies the first video image, receive an interaction function enabling instruction; send the interaction function enabling instruction to the second terminal device; receive an enabling consent instruction from the second terminal device; and display a local video window and a peer video window on the first terminal device in parallel.

Optionally, the determining module is specifically configured to: receive a second action from the second terminal device, where the second action is obtained by the second terminal device by identifying a second video image, and the second video image is an image collected by the second terminal device in the process of the video call between the second terminal device and the first terminal device; and if the first action and the second action are a combined action, determine animation information corresponding to the combined action as the first animation information.

Optionally, the terminal device further includes: a display module, configured to: determine an animation display area in the local video window on the first terminal device; and display, in the animation display area, the animation corresponding to the first animation information.

According to an eighth aspect, this application provides a terminal device, including: a receiving module, configured to receive first animation information from a first terminal device, where the first animation information is determined by the first terminal device based on a first action, the first action is obtained by the first terminal device by identifying a first video image, and the first video image is an image collected by the first terminal device in a process of a video call between the first terminal device and a second terminal device; and a display module, configured to display an animation corresponding to the first animation information in a local video window on the second terminal device.

Optionally, the display module is specifically configured to: determine an animation display area in the local video window, where the animation display area includes an area in which a human body is located; and display, in the animation display area, the animation corresponding to the first animation information.

Optionally, the first animation information is animation information corresponding to the first action.

Optionally, the display module is further configured to: receive an interaction function enabling instruction from the first terminal device; display a first request message, where the first request information is used to request a user to trigger an enabling consent instruction or an enabling denial instruction; receive the enabling consent instruction; display the local video window and a peer video window on the second terminal device in parallel; and send the enabling consent instruction to the first terminal device.

Optionally, the terminal device further includes: an identification module, configured to: identify a second video image to obtain a second action in the second video image, where the second video image is an image collected by the second terminal device in the process of the video call between the second terminal device and the first terminal device; send the second action to the first terminal device, where the second action is used by the first terminal device to determine, when the first terminal device determines that the first action and the second action are a combined action, animation information corresponding to the combined action as the first animation information.

According to a ninth aspect, this application provides a readable storage medium. The readable storage medium stores a computer program. When the computer program is executed, the video interaction method provided in the first aspect, the second aspect, the third aspect, or the fourth aspect is implemented.

According to a tenth aspect, this application provides a terminal device, including a memory and a processor. The memory is configured to store program instructions, and the processor is configured to invoke the program instructions in the memory to perform the video interaction method provided in the first aspect, the second aspect, the third aspect, or the fourth aspect.

According to the video interaction method and device provided in this application, the terminal devices and the wearable devices may be associated, users of both parties may perform sports interaction by using the wearable devices, and the terminal devices may display a corresponding animation in video windows corresponding to a winner, thereby increasing fun and interaction of a video call.

### BRIEF DESCRIPTION OF DRAWINGS

FIG. 1 is a first diagram of a system architecture according to this application;
FIG. 2 is a schematic diagram of a signaling procedure of Embodiment 1 of a video interaction method according to this application;
FIG. 3 is a first diagram of a user interface of a first terminal device according to this application;
FIG. 4 is first diagram of a user interface of a second terminal device according to this application;
FIG. 5 is a second diagram of a user interface of a first terminal device according to this application;
FIG. 6 is a second diagram of a user interface of a second terminal device according to this application;
FIG. 7 is a schematic diagram of a signaling procedure of Embodiment 2 of a video interaction method according to this application;
FIG. 8 is a third diagram of a user interface of a first terminal device according to this application;
FIG. 9 is a third diagram of a user interface of a second terminal device according to this application;
FIG. 10 is a second diagram of a system architecture according to this application;
FIG. 11 is a schematic diagram of a signaling procedure of Embodiment 3 of a video interaction method according to this application;
FIG. 12 is a fourth diagram of a user interface of a first terminal device according to this application;
FIG. 13 is a fourth diagram of a user interface of a second terminal device according to this application;
FIG. 14 is a schematic diagram of a structure of a terminal device 14 according to an embodiment of this application;
FIG. 15 is a schematic diagram of a structure of a terminal device 15 according to an embodiment of this application;
FIG. 16 is a schematic diagram of a structure of a terminal device 16 according to an embodiment of this application;
FIG. 17 is a schematic diagram of a structure of a terminal device 17 according to an embodiment of this application;
FIG. 18 is a schematic diagram of a hardware structure of a terminal device 18 according to an embodiment of this application;
FIG. 19 is a schematic diagram of a hardware structure of a terminal device 19 according to an embodiment of this application;
FIG. 20 is a schematic diagram of a hardware structure of a terminal device 20 according to an embodiment of this application; and
FIG. 21 is a schematic diagram of a hardware structure of a terminal device 21 according to an embodiment of this application.

### DESCRIPTION OF EMBODIMENTS

To make the objectives, technical solutions, and advantages of this application clearer, the following clearly and completely describes the technical solutions in this application with reference to accompanying drawings in this application. Obviously, described embodiments are a part rather than all of embodiments of this application. All other embodiments obtained by a person of ordinary skill in the art based on embodiments of this application without creative efforts shall fall within the protection scope of the present invention.

In this application, it should be explained that terms such as "first" and "second" are merely intended for a purpose of description, and shall not be understood as an indication or implication of relative importance. In this application, "at least one" refers to one or more, and "a plurality of" refers to two or more. The term "and/or" describes an association relationship between associated objects, and indicates that three relationships may exist. For example, A and/or B may represent the following cases: Only A exists, both A and B exist, and only B exists, where A and B may be singular or plural. The character "/" generally indicates a kind of "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

FIG. 1 is a first diagram of a system architecture according to this application. As shown in FIG. 1, the system shown in FIG. 1 may include a first terminal device, a second terminal device, and a server. The first terminal device and the second terminal device may be a smartphone, a tablet computer, a smart screen, a notebook computer, a desktop computer, or the like. In FIG. 1, both the first terminal device and the second terminal device are smartphones. The first terminal device, the second terminal device, and the server are connected by using a network.

In a video call process, both the first terminal device and the second terminal device display two video windows. A local video window and a peer video window are displayed on the first terminal device. The local video window is used to display a video image collected by the first terminal device and a corresponding animation, and the peer video window is used to display a video image collected by the second terminal device and a corresponding animation. Similarly, the second terminal device also displays a local video window and a peer video window. The local video window is used to display the video image collected by the second terminal device and the corresponding animation, and the peer video window is used to display the video image collected by the first terminal device and the corresponding animation.

In the conventional technology, it is assumed that a user A holds the first terminal device, and a user B holds the second terminal device. In a process of a video call between the first terminal device and the second terminal device, when the user A wants to interact with the user B, the user A may perform a specific action. After collecting a video image, the first terminal device identifies the action, and if the action is a preset action, the first terminal device sends the collected video image and animation information corresponding to the preset action to the second terminal device. The second terminal device displays the video image and an animation corresponding to the animation information in the peer video window.

However, the foregoing interaction method in the conventional technology has the following problems:
1. For the user B, an animation effect can be seen in only the peer video window, and no animation is added to the local video window used to display a picture of the user B. As a result, the user B does not have a strong sense of interaction and participation.
2. During a video call, interaction behaviors of a cooperation action that is jointly completed by two parties cannot be identified.
3. Only information collected by a camera can be processed. Action information collected by another device cannot be displayed on a video call page.

To resolve the foregoing technical problem 1, based on the system architecture shown in FIG. 1, FIG. 2 is a schematic diagram of a signaling procedure of Embodiment 1 of a video interaction method according to this application. In this embodiment, it is assumed that a holder of a first terminal device is a user A, and a holder of a second terminal device is a user B. As shown in FIG. 2, the video interaction method provided in this embodiment includes:

S201: The first terminal device identifies a first video image, to obtain a first action in the first video image.

The first video image is an image collected by the first terminal device in a process of a video call between the first terminal device and the second terminal device.

The following describes an occasion at which the first terminal device executes the identification operation.

In a possible implementation, after a video call between the first terminal device and the second terminal device is connected, an interaction function is enabled by default, and the first terminal device may start to execute the identification operation after the video call is connected.

In another possible implementation, after the video call between the first terminal device and the second terminal device is connected, the interaction function is disabled by default. Therefore, when the user A wants to interact with the user B, the user A may trigger an interaction function enabling instruction on the first terminal device. After receiving the instruction, the first terminal device sends the instruction to the second terminal device. After receiving the interaction function enabling instruction, the second terminal device displays a first request message, where the first request information is used to request a user to trigger an enabling consent instruction or an enabling denial instruction. If agrees to enable the interaction function, the user B triggers the enabling consent instruction on the second terminal device, and the second terminal device sends the enabling consent instruction to the first terminal device. The first terminal device enables the interaction function according to the enabling consent instruction, and after enabling the interaction function, the first terminal device may start to execute the identification operation.

Corresponding to the foregoing first implementation, to improve an interaction experience effect, after the video call between the first terminal device and the second terminal device is connected, the first terminal device may display a peer video window and a local video window on the first terminal device in parallel, and the second terminal device may also display a peer video window and a local video window on the second terminal device in parallel.

Corresponding to the foregoing second implementation, to improve an interaction experience effect, after receiving the enable consent instruction sent by the second terminal device, the first terminal device may display the peer video window and the local video window on the first terminal device in parallel, as shown in FIG. 3. Similarly, after receiving the enabling consent instruction triggered by the user B, the second terminal device may display the peer video window and the local video window on the second terminal device in parallel, as shown in FIG. 4.

S202: The first terminal device determines, based on the first action and a plurality of preset actions, animation information corresponding to the first action.

S203: The first terminal device determines the animation information corresponding to the first action as first animation information.

In a possible implementation, a plurality of actions may be preset, and a mapping relationship between each action and animation information is set. After collecting the first video image, the first terminal device identifies the first action in the first video image; performs matching on the identified first action with the plurality of preset actions; and if the first action is a first preset action in the plurality of preset actions, determines animation information corresponding to the first preset action as the animation information corresponding to the first action; and may further determine the animation information corresponding to the first action as the first animation information.

For a manner in which the first terminal device obtains the first action through identification, refer to the conventional technology. Details are not described in this application again.

S204: The first terminal device sends the first animation information to the second terminal device.

S205: The second terminal device displays an animation corresponding to the first animation information in the local video window.

In a possible implementation, after receiving the first animation information, the second terminal device may first determine an animation display area in the local video window, where the animation display area may be, for example, an area in which a human body is located, and then display, in the animation display area, the animation corresponding to the first animation information. After receiving the first animation information, the second terminal device does not display the corresponding animation in the peer video window, but displays the corresponding animation in the local video window that is used to display a picture of the user B, thereby enhancing a sense of participation of the user and improving user experience.

It should be noted that, in order that the user A can see an animation effect generated by an action performed by the user A in an area of a body of the user B, the second terminal device simultaneously sends the collected video image and the animation superimposed on the image to the first terminal device. In this way, the first terminal device can simultaneously display the image of the user B and the superimposed animation in the peer video window, so that the user A can see the animation effect generated by the action performed by the user A in the area of the body of the user B, thereby improving user experience of the user A.

The following describes a process of S201 to S204 by using an example.

Referring to FIG. 3, FIG. 4, and the foregoing description, after a video interaction function is enabled, FIG. 3 is a display interface of a first terminal device, where a local video window and a peer video window are displayed in parallel, a left window is the local video window, and a right window is the peer video window. FIG. 4 is a display interface of a second terminal device. Similarly, a local video window and a peer video window on the second terminal device are also displayed in parallel, where a left window is the local video window, and a right window is the peer video window. Referring to FIG. 5, when a user A wants to interact with a user B, the user A may perform an action of showing love with both hands. After collecting a first video image, the first terminal device identifies the first video image to obtain the action of showing love with both hands. Assuming that the action of showing love with both hands is a first preset action, and animation information corresponding to the first preset action is roses, the animation information is sent to the second terminal device as first animation information. After receiving the first animation information, as shown in FIG. 6, the second terminal device detects, in the local video window, an area in which a body of the user B is located, and displays, in the area, an animation corresponding to the roses. It can be seen that, in the video interaction method provided by this embodiment, when the user A performs a specific action, the user B may see an animation effect in the local video window used to display a picture of the user B, and a sense of participation of the user B is enhanced.

It should be noted that, in this embodiment, the solution of this application is described by using an example in which the user A performs an action to implement interaction with the user B. This is similar to a process in which the user B performs an action to implement interaction with the user A. Details are not described herein again in this application.

According to the video interaction method provided in this embodiment, after collecting the first video image, the first terminal device identifies the first video image to obtain the first action in the first video image, and sends the animation information corresponding to the action to the second terminal device. The second terminal device detects the animation display area in the local video window, and displays the animation corresponding to the animation information in the animation display area, so that the user B can view the animation effect in the local video window used to display the picture of the user B, thereby improving the sense of participation of the user B.

To resolve the foregoing technical problem 2, FIG. 7 is a schematic diagram of a signaling procedure of Embodiment 2 of a video interaction method according to this application. Similarly, in this embodiment, it is assumed that a holder of a first terminal device is a user A, and a holder of a second terminal device is a user B. As shown in FIG. 7, the video interaction method provided in this embodiment includes:

S701: The first terminal device identifies a first video image, to obtain a first action in the first video image.

S702: The second terminal device identifies a second video image, to obtain a second action in the second video image.

The first video image is an image collected by the first terminal device in a video call process between the first terminal device and the second terminal device, and the second video image is an image collected by the second terminal device in a process of a video call between the second terminal device and the first terminal device.

The following describes an occasion at which the first terminal device and the second terminal device execute identification operations.

In a possible implementation, after the video call between the first terminal device and the second terminal device is connected, an interaction function is enabled by default. In this case, after the video call is connected, the first terminal device may start to perform the identification operation on the first video image, and the second terminal device may start to execute the identification operation on the second video image.

In another possible implementation, after the video call between the first terminal device and the second terminal device is connected, the interaction function is disabled by default. Therefore, the user A or the user B may trigger a video interaction enabling instruction. For example, when the user A wants to interact with the user B, the user A may trigger an interaction function enabling instruction on the first terminal device. After receiving the instruction, the first terminal device sends the instruction to the second terminal device. After receiving the interaction function enabling instruction, the second terminal device displays a first request message, where the first request information is used to request a user to trigger an enabling consent instruction or an enabling denial instruction. If the user B agrees to enable the interaction function, the user B triggers the enabling consent instruction on the second terminal device. After receiving the enabling consent instruction, the second terminal device may start to execute the identification operation on the second video image. In addition, the second terminal device sends the enabling consent instruction to the first terminal device, and after receiving the enabling consent instruction, the first terminal device may start to execute the identification operation on the first video image.

For an implementation in which the first terminal device identifies the first video image, to obtain the first action; and the second terminal device identifies the second video image, to obtain the second action, refer to the conventional technology. Details are not described herein in this application.

S703: The second terminal device sends the second action to the first terminal device.

Specifically, after receiving the second action, the first terminal device determines whether the first action and the second action are a combined action. If the first action and the second action are the combined action, S704 is performed.

S704: Animation information corresponding to the combined action is determined as first animation information.

S705: The first terminal device sends the first animation information to the second terminal device.

S706: The second terminal device displays an animation corresponding to the first animation information in a local video window.

In a possible implementation, after receiving the first animation information, the second terminal device may first determine an animation display area in the local video window, where the animation display area may be, for example, an area in which a human body is located, and then display, in the animation display area, the animation corresponding to the first animation information.

S707: The first terminal device displays the animation corresponding to the first animation information in a local video window.

Similar to S706, the first terminal device may first determine an animation display area in the local video window, where the animation display area may be, for example, an area in which a human body is located, and then display, in the animation display area, the animation corresponding to the first animation information.

It should be noted that, in order that the user A can see an animation effect generated by the combined action in an area of a body of the user B, the second terminal device simultaneously sends the collected video image and the animation superimposed on the image to the first terminal device. In this way, the first terminal device can simultaneously display the image of the user B and the superimposed animation in a peer window, so that the user A can see the animation effect generated by the combined action in the area of the body of the user B, thereby improving user experience of the user A.

Similarly, in order that the user B can see an animation effect generated by the combined action in an area of a body of the user A, the first terminal device simultaneously sends the collected video image and the animation superimposed on the image to the second terminal device. In this way, the second terminal device can simultaneously display the image of the user A and the superimposed animation in a peer window, so that the user B can see the animation effect generated by the combined action in the area of the body of the user A, and user experience of the user A is also improved.

The following describes a process of S701 to S707 by using an example.

It is assumed that a user A and a user B are an elder and a child. When the user A and the user B make a video call at home by using a smart screen, refer to FIG. 3 and FIG. 4. After an interaction function is enabled, a local video window and a peer video window of a first terminal device are displayed in parallel, and a local video window and a peer video window of a second terminal device are also displayed in parallel. Referring to FIG. 8, when the user A and the user B want to interact with each other, the user A and the user B may perform a hug action of opening arms in a same time period. After collecting a first video image, the first terminal device identifies the first video image to obtain a hug action in the first video image. After collecting a second video image, the second terminal device identifies the second video image to obtain a hug action in the second video image, and sends the hug action to the first terminal device. It is assumed that the hug action at both ends is a combined action, and animation information corresponding to the combined action is love surrounding. On one hand, the first terminal device displays an animation corresponding to the love surrounding in the local video window, as shown in FIG. 8. On the other hand, the animation information is sent to the second terminal device. After receiving the animation information, the second terminal device also displays the animation corresponding to the love surrounding in the local video window, as shown in FIG. 9.

Still referring to FIG. 8 and FIG. 9, for the peer video window of the first terminal device, because the second terminal device simultaneously sends the collected video image and the superimposed animation to the first terminal device, the peer video window of the first terminal device may simultaneously display the video image and the animation, so that the user A can see an animation effect of the combined action around a body of the user B. Similarly, for the peer video window of the second terminal device, because the first terminal device simultaneously sends the collected video image and the superimposed animation to the second terminal device, the peer video window of the second terminal device may simultaneously display the video image and the animation, so that the user B can see an animation effect of the combined action around a body of the user A. User experience of both parties is improved.

It should be noted that in this embodiment, the solution of this application is described by using an example in which the first terminal device performs determining of the combined action. The determining of the combined action may alternatively be performed by the second terminal device, or may be performed by a server. A determining process is similar to that in this embodiment, and details are not described herein again in this application.

According to the video interaction method provided in this embodiment, the combined action that is jointly completed by two users in the process of the video call can be identified, and both users can see the animation effect generated by the combined action, thereby improving a sense of participation of the two users.

FIG. 10 is a second diagram of a system architecture according to this application. Based on the system architecture shown in FIG. 1, the system shown in FIG. 10 further includes a first wearable device and a second wearable device. The first wearable device is wirelessly connected to the first terminal device, and the second wearable device is wirelessly connected to the second terminal device. The first wearable device and the second wearable device may be a band, a watch, smart glasses, or the like.

To resolve the foregoing technical problem 3, based on the system architecture shown in FIG. 10, FIG. 11 is a schematic diagram of a signaling procedure of Embodiment 3 of a video interaction method according to this application. In this embodiment, it is assumed that a holder of a first terminal device is a user A, the user A wears the first wearable device, a holder of a second terminal device is a user B, and the user B wears the second wearable device. As shown in FIG. 11, the video interaction method provided in this embodiment includes the following steps:

S1101: The first terminal device obtains first action information collected by the first wearable device and second action information collected by the second wearable device.

The following describes an implementation in which the first terminal device obtains the first action information collected by the first wearable device and the second action information collected by the second wearable device.

When both parties want to interact with each other in a video call process, either party may trigger an interaction function enabling instruction, and the interaction function enabling instruction may carry a timer. In this embodiment, that the user A triggers the interaction function enabling instruction is used as an example. After receiving the interaction function enabling instruction triggered by the user A, on one hand, the first terminal device sends a first collection instruction to the first wearable device, so that the first wearable device starts to collect action information, and on the other hand, the first terminal device sends the interaction function enabling instruction to the second terminal device. After receiving the interaction function enabling instruction, the second terminal device sends a second collection instruction to the second wearable device, so that the second wearable device starts to collect action information. When the timer stops, the first terminal device determines the action information collected by the first wearable device as the first action information, and determines the action information collected by the second wearable device as the second action information.

In a possible implementation, after receiving the interaction function enabling instruction triggered by the user A, the first terminal device may display a local video window and a peer video window on the first terminal device in parallel to optimize an experience effect. After receiving the interaction function enabling instruction from the first terminal device, the second terminal device may also display a local video window and a peer video window in parallel.

In a possible implementation, in order that the user A and the user B can view the action information of the user A and the user B in real time, the action information collected by the first wearable device may be transmitted to the first terminal device in real time, and the first terminal device displays the action information in a local window in real time. In addition, the first terminal device simultaneously sends a collected video image and the action information to the second terminal device, so that the second terminal device not only displays the video image, but also displays the action information of the user A in the peer video window. Similarly, the action information collected by the second wearable device may be transmitted to the second terminal device in real time, and the second terminal device displays the action information in real time in a local window. In addition, the second terminal device simultaneously sends the collected video image and the action information to the first terminal device, so that the first terminal device not only displays the video image but also displays the action information of the user B in the peer video window. In this way, the user A may view the action information of the user A and the user B in real time on the first terminal device, and the user B may also view the action information of the user B and the user A in real time on the second terminal device.

S1102: The first terminal device determines a target terminal identity based on the first action information and the second action information.

S 1103: The first terminal device sends the target terminal identity to the second terminal device.

S 1104: The second terminal device displays an animation in a video window corresponding to the target terminal identity.

S 1105: The first terminal device displays an animation in a video window corresponding to the target terminal identity.

The following describes a process of S101 to S 1105 by using an example.

It is assumed that a user A and a user B make a date to work out online, and perform a video call at home by using a smart screen. When the user A and the user B want to compete in push-ups, either party may trigger an interactive function enabling instruction. The interactive function enabling instruction may carry a timer. For example, the timer is 1 minute. In this embodiment, that the user A triggers the interaction function enabling instruction is used as an example. After receiving the interaction function enabling instruction triggered by the user A, on one hand, a first terminal device sends a first collection instruction to a first wearable device, so that the first wearable device starts to collect action information, and on the other hand, the first terminal device sends the interaction function enabling instruction to a second terminal device. After receiving the interaction function enabling instruction, the second terminal device sends a second collection instruction to a second wearable device, so that the second wearable device starts to collect action information. When the timer stops timing, assuming that a quantity of push-ups collected by the first wearable device is 50 and a quantity of push-ups collected by the second wearable device is 45, and the first terminal device determines the user A as a winner after comparison, an identity of the first terminal device is used as a target terminal identity. For the first terminal device, if a video window corresponding to the target terminal identity is a local video window, the first terminal device displays an animation in the local video window, as shown in FIG. 12. For the second terminal device, if a video window corresponding to the target terminal identity is a peer video window, the second terminal device displays an animation in the peer video window, as shown in FIG. 13.

In the video interaction method provided in this embodiment, the terminal devices and the wearable devices may be associated, users of both parties may perform sports interaction by using the wearable devices, and the terminal devices may display a corresponding animation in video windows corresponding to a winner, thereby increasing fun and interaction of a video call.

FIG. 14 is a schematic diagram of a structure of a terminal device 14 according to an embodiment of this application. As shown in FIG. 14, the terminal device 14 provided in this application includes:
an obtaining module 140, configured to obtain first action information collected by a first wearable device and second action information collected by a second wearable device, where the first wearable device is connected to a first terminal device, and the second wearable device is connected to a second terminal device;
a determining module 141, configured to determine a target terminal identity based on the first action information and the second action information;
a sending module 142, configured to send the target terminal identity to the second terminal device, where the target terminal identity is used by the second terminal device to display an animation in a video window corresponding to the target terminal identity; and
a display module 143, configured to display the animation in the video window corresponding to the target terminal identity.

Optionally, the obtaining module 140 is specifically configured to:
receive an interaction function enabling instruction, where the interaction function enabling instruction includes a timer;
send a first collection instruction to the first wearable device;
send the interaction function enabling instruction to the second terminal device, where the interaction function enabling instruction is used by the second terminal device to send a second collection instruction to the second wearable device according to the interaction function enabling instruction;
determine action information collected by the first wearable device when the timer stops as the first action information;
receive action information that is sent by the second terminal device and that is collected by the second wearable device when the timer stops; and
determine the action information collected by the second wearable device as the second action information.

Optionally, the display module 143 is further configured to:
display, in real time, the action information collected by the first wearable device.

Optionally, the display module 143 is further configured to:
display a local video window and a peer video window on the first terminal device in parallel.

The terminal device provided in this application may perform steps performed by the first terminal device in Embodiment 3 of the method. Implementation principles and beneficial effects of the terminal device are similar to those of the method embodiment. Details are not described herein again.

FIG. 15 is a schematic diagram of a structure of a terminal device 15 according to an embodiment of this application. As shown in FIG. 15, the terminal device 15 provided in this application includes:
a receiving module 150, configured to receive a terminal device identity from a first terminal device, where the target terminal identity is determined by the first terminal device based on first action information and second action information, the first action information is collected by a first wearable device, the second action information is collected by a second wearable device, the first wearable device is connected to the first terminal device, and the second wearable device is connected to a second terminal device; and
a display module 151, configured to display an animation in a video window corresponding to the target terminal identity.

Optionally, the terminal device 15 further includes:
a processing module 152, configured to: receive an interaction function enabling instruction from the first terminal device, where the interaction function enabling instruction includes a timer;
send a second collection instruction to the second wearable device according to the interaction function enabling instruction; and
send, to the first terminal device, action information collected by the second wearable device when the timer stops.

Optionally, the display module 151 is further configured to:
display, in real time, the action information collected by the second wearable device.

Optionally, the display module 151 is further configured to:
display a local video window and a peer video window on the second terminal device in parallel.

The terminal device provided in this application may perform steps performed by the second terminal device in Embodiment 3 of the method. Implementation principles and beneficial effects of the terminal device are similar to those of the method embodiment. Details are not described herein again.

FIG. 16 is a schematic diagram of a structure of a terminal device 16 according to an embodiment of this application. As shown in FIG. 16, the terminal device 16 provided in this application includes:
an identification module 160, configured to identify a first video image to obtain a first action in a first video image, where the first video image is an image collected by a first terminal device in a process of a video call between the first terminal device and a second terminal device;
a determining module 161, configured to determine first animation information based on the first action; and
a sending module 162, configured to send the first animation information to the second terminal device, where the first animation information is used by the second terminal device to display, in a local video window, an animation corresponding to the first animation information.

Optionally, the determining module 161 is specifically configured to:
determine, based on the first action and a plurality of preset actions, animation information corresponding to the first action; and

Determine the animation information corresponding to the first action as the first animation information.

Optionally, the terminal device 16 further includes:
a processing module 163, configured to: receive an interaction function enabling instruction before the identification module identifies the first video image;
send the interaction function enabling instruction to the second terminal device;
receive an enabling consent instruction from the second terminal device; and
display a local video window and a peer video window on the first terminal device in parallel.

Optionally, the determining module 161 is specifically configured to:
receive a second action from the second terminal device, where the second action is obtained by the second terminal device by identifying a second video image, and the second video image is an image collected by the second terminal device in the process of the video call between the second terminal device and the first terminal device; and
if the first action and the second action are a combined action, determine animation information corresponding to the combined action as the first animation information.

Optionally, the terminal device 16 further includes:
a display module 164, configured to determine an animation display area in a local video window on the first terminal device; and
display, in the animation display area, an animation corresponding to the first animation information.

The terminal device provided in this application may perform steps performed by the first terminal device in Embodiment 1 or Embodiment 2 of the method. Implementation principles and beneficial effects of the terminal device are similar to those of the method embodiment. Details are not described herein again.

FIG. 17 is a schematic diagram of a structure of a terminal device 17 according to an embodiment of this application. As shown in FIG. 17, the terminal device 17 provided in this application includes:
a receiving module 170, configured to receive first animation information from a first terminal device, where the first animation information is determined by the first terminal device based on a first action, the first action is obtained by the first terminal device by identifying a first video image, and the first video image is an image collected by the first terminal device in a process of a video call between the first terminal device and a second terminal device; and
a display module 171, configured to display an animation corresponding to the first animation information in a local video window on the second terminal device.

Optionally, the display module 171 is specifically configured to:
determine an animation display area in the local video window, where the animation display area includes an area in which a human body is located; and
display, in the animation display area, the animation corresponding to the first animation information.

Optionally, the first animation information is animation information corresponding to the first action.

Optionally, the display module 171 is further configured to:
receive an interaction function enabling instruction from the first terminal device;
display a first request message, where the first request information is used to request a user to trigger an enabling consent instruction or an enabling denial instruction;
receive the enabling consent instruction;
display the local video window and a peer video window on the second terminal device in parallel; and send the enabling consent instruction to the first terminal device.

Optionally, the terminal device further includes:
an identification module 172, configured to: identify a second video image to obtain a second action in the second video image, where the second video image is an image collected by the second terminal device in the process of the video call between the second terminal device and the first terminal device; and send the second action to the first terminal device, where the second action is used by the first terminal device to determine, when the first terminal device determines that the first action and the second action are a combined action, animation information corresponding to the combined action as the first animation information.

The terminal device provided in this application may perform steps performed by the second terminal device in Embodiment 1 or Embodiment 2 of the method. Implementation principles and beneficial effects of the terminal device are similar to those of the method embodiment. Details are not described herein again.

FIG. 18 is a schematic diagram of a hardware structure of a terminal device 18 according to an embodiment of this application. As shown in FIG. 18, the terminal device 18 includes a memory 1801 and a processor 1802. The memory 1801 is configured to store program instructions, and the processor 1802 is configured to invoke the program instructions in the memory 1801 to perform the steps performed by the first terminal device in Embodiment 1 or Embodiment 2 of the method.

FIG. 19 is a schematic diagram of a hardware structure of a terminal device 19 according to an embodiment of this application. As shown in FIG. 19, the terminal device 19 includes a memory 1901 and a processor 1902. The memory 1901 is configured to store program instructions, and the processor 1902 is configured to invoke the program instructions in the memory 1901 to perform the steps performed by the second terminal device in Embodiment 1 or Embodiment 2 of the method.

FIG. 20 is a schematic diagram of a hardware structure of a terminal device 20 according to an embodiment of this application. As shown in FIG. 20, the terminal device 20 includes a memory 2001 and a processor 2002. The memory 2001 is configured to store program instructions, and the processor 2002 is configured to invoke the program instructions in the memory 2001 to perform the steps performed by the first terminal device in Embodiment 3 of the method.

FIG. 21 is a schematic diagram of a hardware structure of a terminal device 21 according to an embodiment of this application. As shown in FIG. 21, the terminal device 21 includes a memory 2101 and a processor 2102. The memory 2101 is configured to store program instructions, and the processor 2102 is configured to invoke the program instructions in the memory 2101 to perform the steps performed by the second terminal device in Embodiment 3 of the method.

This application further provides a readable storage medium. The readable storage medium stores a computer program. When the computer program is executed, the steps performed by the first terminal device in Embodiment 1 or Embodiment 2 of the method are implemented.

This application further provides a readable storage medium. The readable storage medium stores a computer program. When the computer program is executed, the steps performed by the second terminal device in Embodiment 1 or Embodiment 2 of the method are implemented.

This application further provides a readable storage medium. The readable storage medium stores a computer program. When the computer program is executed, steps performed by the first terminal device in Embodiment 3 of the method are implemented.

This application further provides a readable storage medium. The readable storage medium stores a computer program. When the computer program is executed, the steps performed by the second terminal device in Embodiment 3 of the method are implemented.

In the several embodiments according to this application, it should be understood that the disclosed device and method may be implemented in another manner. For example, the described device embodiment is only an example. For example, division into the modules is merely logical function division and there may be another division manner during actual implementation. For example, a plurality of modules or components may be combined or integrated into another system, or some features may be ignored or not implemented. In addition, the displayed or discussed mutual couplings or direct couplings or communication connections may be implemented by using some interfaces. The indirect couplings or communication connections between the apparatuses or modules may be implemented in electronic, mechanical, or other forms.

The modules described as discrete components may or may not be physically separate, and components displayed as the modules may or may not be physical units. That is, the components may be located in one position, or may be distributed on a plurality of network units. Some or all of the modules may be selected based on actual requirements to achieve the objectives of the solutions in embodiments of this application.

In addition, function modules in embodiments of this application may be integrated into one processing unit, or each of the modules may stand alone physically, or two or more modules may be integrated into one unit. The unit formed by the modules may be implemented in a form of hardware, or may be implemented in a form of hardware in addition to a software functional unit.

When the foregoing integrated module is implemented in a form of a software functional module, the integrated unit may be stored in a computer-readable storage medium. The software function module is stored in a storage medium and includes several instructions to enable a computer device (which may be a personal computer, a server, or a network device) or a processor (English: processor) to perform some steps of the methods in the embodiments of this application.

It should be understood that the processor may be a central processing unit (central processing unit, CPU), or may be another general-purpose processor, a digital signal processor (digital signal processor, DSP), an application-specific integrated circuit (application specific integrated circuit, ASIC), or the like. The general-purpose processor may be a microprocessor, or the processor may be any conventional processor or the like. The steps of the methods disclosed with reference to the present invention may be directly implemented by a hardware processor, or may be implemented by a combination of hardware and software modules in a processor.

The memory may include a high-speed RAM memory, or may include a non-volatile memory NVM such as at least one magnetic disk memory, or may include a USB flash drive, a removable hard disk, a read-only memory, a magnetic disk, an optical disc, or the like.

The bus may be an industry standard architecture (industry standard architecture, ISA) bus, a peripheral component interconnect (peripheral component, PCI) bus, an extended industry standard architecture (extended industry standard architecture, EISA) bus, or the like. The communications bus may be classified into an address bus, a data bus, a control bus, or the like. For ease of representation, the bus in the accompanying drawings in this application is not limited to only one bus or only one type of bus.

All or some of the embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions described in embodiments of this application are generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any available medium accessible by a computer, or a data storage device, such as a server or a data center, integrating one or more usable media. The available medium may be a magnetic medium (for example, a floppy disk, a hard disk, or a magnetic tape), an optical medium (for example, a DVD), a semiconductor medium (for example, a solid-state drive solid state disk, SSD), or the like.

## Claims

1. A video interaction method, applied to a first terminal device, wherein the method comprises:
obtaining first action information collected by a first wearable device and second action information collected by a second wearable device, wherein the first wearable device is connected to the first terminal device, and the second wearable device is connected to a second terminal device;
determining a target terminal identity based on the first action information and the second action information;
sending the target terminal identity to the second terminal device, wherein the target terminal identity is used by the second terminal device to display an animation in a video window corresponding to the target terminal identity; and
displaying the animation in a video window corresponding to the target terminal identity.

2. The method according to claim 1, wherein the obtaining first action information collected by a first wearable device and second action information collected by a second wearable device comprises:
receiving an interaction function enabling instruction, wherein the interaction function enabling instruction comprises a timer;
sending a first collection instruction to the first wearable device;
sending the interaction function enabling instruction to the second terminal device, wherein the interaction function enabling instruction is used by the second terminal device to send a second collection instruction to the second wearable device according to the interaction function enabling instruction;
determining action information collected by the first wearable device when the timer stops as the first action information;
receiving action information that is sent by the second terminal device and that is collected by the second wearable device when the timer stops; and
determining the action information collected by the second wearable device as the second action information.

3. The method according to claim 1 or 2, wherein the method further comprises:
displaying, in real time, the action information collected by the first wearable device.

4. The method according to claim 3, wherein before the displaying, in real time, the action information collected by the first wearable device, the method further comprises:
displaying a local video window and a peer video window on the first terminal device in parallel.

5. A video interaction method, applied to a second terminal device, wherein the method comprises:
receiving a terminal device identity from a first terminal device, wherein the target terminal identity is determined by the first terminal device based on first action information and second action information, the first action information is collected by a first wearable device, the second action information is collected by a second wearable device, the first wearable device is connected to the first terminal device, and the second wearable device is connected to the second terminal device; and
displaying an animation in a video window corresponding to the target terminal identity.

6. The method according to claim 5, wherein before the receiving a target terminal identity from a first terminal device, the method further comprises:
receiving an interaction function enabling instruction from the first terminal device, wherein the interaction function enabling instruction comprises a timer;
sending a second collection instruction to the second wearable device according to the interaction function enabling instruction; and
sending, to the first terminal device, action information collected by the second wearable device when the timer stops.

7. The method according to claim 5 or 6, wherein the method further comprises:
displaying, in real time, the action information collected by the second wearable device.

8. The method according to claim 7, wherein before the displaying, in real time, the action information collected by the second wearable device, the method further comprises:
displaying a local video window and a peer video window on the second terminal device in parallel.

9. A terminal device, comprising:
an obtaining module, configured to obtain first action information collected by a first wearable device and second action information collected by a second wearable device, wherein the first wearable device is connected to the first terminal device, and the second wearable device is connected to a second terminal device;
a determining module, configured to determine a target terminal identity based on the first action information and the second action information;
a sending module, configured to send the target terminal identity to the second terminal device, wherein the target terminal identity is used by the second terminal device to display an animation in a video window corresponding to the target terminal identity; and
a display module, configured to display the animation in a video window corresponding to the target terminal identity.

10. The terminal device according to claim 9, wherein the obtaining module is specifically configured to:
receive an interaction function enabling instruction, wherein the interaction function enabling instruction comprises a timer;
send a first collection instruction to the first wearable device;
send the interaction function enabling instruction to the second terminal device, wherein the interaction function enabling instruction is used by the second terminal device to send a second collection instruction to the second wearable device according to the interaction function enabling instruction;
determine action information collected by the first wearable device when the timer stops as the first action information;
receive action information that is sent by the second terminal device and that is collected by the second wearable device when the timer stops; and
determine the action information collected by the second wearable device as the second action information.

11. The terminal device according to claim 9 or 10, wherein the display module is further configured to:
display, in real time, the action information collected by the first wearable device.

12. The terminal device according to claim 11, wherein the display module is further configured to:
display a local video window and a peer video window on the first terminal device in parallel.

13. A terminal device, comprising:
a receiving module, configured to receive a terminal device identity from a first terminal device, wherein the target terminal identity is determined by the first terminal device based on first action information and second action information, the first action information is collected by a first wearable device, the second action information is collected by a second wearable device, the first wearable device is connected to the first terminal device, and the second wearable device is connected to a second terminal device; and
a display module, configured to display an animation in a video window corresponding to the target terminal identity.

14. The terminal device according to claim 13, further comprising:
a processing module, configured to: receive an interaction function enabling instruction from the first terminal device, wherein the interaction function enabling instruction comprises a timer;
send a second collection instruction to the second wearable device according to the interaction function enabling instruction; and
send, to the first terminal device, action information collected by the second wearable device when the timer stops.

15. The terminal device according to claim 13 or 14, wherein the display module is further configured to:
display, in real time, the action information collected by the second wearable device.

16. The terminal device according to claim 15, wherein the display module is further configured to:
display a local video window and a peer video window on the second terminal device in parallel.

17. A readable storage medium, wherein the readable storage medium stores a computer program, and when the computer program is executed, the method according to any one of claims 1 to 4 is implemented.

18. A readable storage medium, wherein the readable storage medium stores a computer program, and when the computer program is executed, the method according to any one of claims 5 to 8 is implemented.

19. A terminal device, comprising a memory and a processor, wherein
the memory is configured to store program instructions, and the processor is configured to invoke the program instructions in the memory to perform the method according to any one of claims 1 to 4.

20. A terminal device, comprising a memory and a processor, wherein
the memory is configured to store program instructions, and the processor is configured to invoke the program instructions in the memory to perform the method according to any one of claims 5 to 8.
